# EUROPÄISCHE PATENTSCHRIFT

(11) **EP 2 855 553 B1**
(45) Veröffentlichungstag und Bekanntmachung des Hinweises auf die Patenterteilung: **01.03.2017**
(21) Anmeldenummer: 13724819.1
(22) Anmeldetag: 23.05.2013
(51) Int. Cl.: C08G 18/78, C09D 175/14, C08G 18/67, C09D 11/00, C09D 175/16, C08G 18/32

(54) **STRAHLUNGSHÄRTBARE VERBINDUNGEN**
RADIATION-CURABLE COMPOUNDS
COMPOSES DURCISSABLES PAR RAYONNEMENT

(30) Priorität: 30.05.2012 EP 12169921
(43) Veröffentlichungstag der Anmeldung: 08.04.2015
(73) Patentinhaber: BASF SE, 67056 Ludwigshafen am Rhein (DE)
(72) Erfinder: KACZUN, Jürgen, 67157 Wachenheim (DE); SCHWALM, Reinhold, 67157 Wachenheim (DE); TRUMBO, David, Wyandotte, MI 48192 (US); SITZMANN, Eugene Valentine, Wyandotte, MI 48192 (US)
(74) Vertreter: Maiwald Patentanwalts GmbH
(86) Internationale Anmeldenummer: PCT/EP2013/060575
(87) Internationale Veröffentlichungsnummer: WO 2013/178523

(56) Entgegenhaltungen:
- WO-A1-00/39183
- WO-A1-2007/043728
- WO-A1-2010/018074
- DE-A1-102006 047 863

## Beschreibung

Die Erfindung betrifft niedrigviskose Formulierungen strahlungshärtbarer Verbindungen, Verfahren zu deren Herstellung, deren Verwendung und diese enthaltende Tinten, Druckfarben und Drucklacke.

US 3429852, US 3214492, US 3622848, US 4304895 offenbaren Aceto- und Benzophenonderivate als Photoinitiatoren, die, gegebenenfalls über eine Spacergruppe, mit einer (Meth)Acrylatgruppe verbunden sind und die somit bei einer radikalischen Polymerisation einbaubar sind.

DE 19501025 offenbart an Photoinitiatorsysteme gebundene Vinyloxycarbonylgruppen, die bei einer radikalischen Polymerisation ebenfalls einbaubar sind.

Die dort offenbarten Verbindungen sind jedoch aufgrund der beschränkten Möglichkeiten der Spacerstrukturen nur in geringen Grenzen variabel. Außerdem werden solche Verbindungen oft nicht vollständig bei der UV -Polymerisation umgesetzt und können infolgedessen aus der Beschichtung migrieren.

WO 03/68785 offenbart Umsetzungen von Photoinitiatoren des Acylphosphinoxid-Typs mit Diisocyanaten. Weitergehende Funktionalisierung der freien Isocyanatgruppen wird nicht offenbart.

WO 03/68783 offenbart Umsetzungen von gegebenenfalls hydroxyalkylierten Acylphosphinoxid-Photoinitiatoren mit Di- und Polyisocyanaten. Weitergehende Funktionalisierung der freien Isocyanatgruppen wird nicht offenbart.

EP 632329 offenbart Photoinitiatoren vom Benzophenon-, Acetophenon- oder Hydroxyacetophenontyp, die mit Diisocyanaten funktionalisiert werden. Die so erhaltenen Isocyanate können anschließend weiter derivatisiert werden, beispielsweise durch Umsetzung der freien Isocyanatgruppe mit Hydroxyalkyl(meth)acrylaten, so daß Photoinitiatoren erhalten werden, die bei einer radikalischen Polymerisation einbaubar sind.

Nachteilig an dieser Funktionalisierung ist, daß man durch den Einsatz von Diisocyanaten lediglich einen geringen Funktionalisierungsgrad erzielen kann.

DE 10 2006 047 863 A1 beschreibt die Anbindung von Photoinitiatoren an Polyisocyanate um diese einbaubar zu gestalten.

Nachteilig ist, daß die so entstehenden Produkte noch eine relativ hohe Viskosität aufweisen, was ihre Einarbeitbarkeit und Vielseitigkeit in Beschichtungsmassen und insbesondere Druckfarben und Drucklacken erschwert. Zudem werden ausschließlich Herstellungsbeispiele unter Verwendung von Dibutylzinndilaurat offenbart, das toxikologisch bedenklich ist.

WO 00/39183 beschreibt allophanatgruppenhaltige Polyisocyanate, die radikalisch polymerisierbare, aktivierte C=C-Doppelbindungen tragen.

DE 102 46 512 beschreibt ein unterschiedliches Verfahren zur Herstellung der gleichen Verbindungen wie in WO 00/39183 beschrieben, sowie unterschiedliche Folgeprodukte dieser Verbindungen. Offenbart wird auch die chemische Kopplung von Polymerisationsstabilisatoren über freie Isocyanatgruppen.

Nachteilig an diesen Polyisocyanaten ist, daß sie zur Strahlungshärtung mit UV die Zugabe eines Photoinitiators erfordern. Werden Photoinitiatoren als gesonderte Komponenten zugegeben, so erfordert dies zum einen einen zusätzlichen Dosierschritt und bringt zum anderen die Gefahr einer Fehldosierung mit sich. Außerdem besteht bei den zudosierten niedermolekularen Photoinitiatoren die Gefahr, dass diese aus der gehärteten Beschichtung migrieren können und so im Falle der Anwendung in UV härtbaren Druckfarben für Verpackungen auf das Füllgut übergehen können.

Aufgabe der vorliegenden Erfindung war es, Photoinitiatoren zur Verfügung zu stellen, die in strahlungshärtbaren Beschichtungsmassen und besonders Tinten, Druckfarben und Drucklacken möglichst vollständig einbaubar sind und ein geringere Migrationstendenz zeigen und dabei eine niedrigere Viskosität aufweisen als vergleichbare Produkte aus dem Stand der Technik. Zudem sollen die einbaubaren Photoinitiatoren keine toxikologisch bedenklichen Stoffe enthalten, die deren Anwendbarkeit z.B. in Verpackungen für Lebensmittel entgegenstehen.

Die Aufgabe wurde gelöst durch ein Verfahren zur Herstellung von einbaubaren Photoinitiatoren mit niedriger Viskosität, umfassend die Schritte
1) Aufbau eines Polyurethans A, enthaltend als Aufbaukomponenten
   (a) mindestens ein allophanatgruppenhaltiges Polyisocyanat mit einer NCO Funktionalität von mindestens 2, aufgebaut aus aliphatischen C₄- bis C₂₀-Alkylendiisocyanaten,
   (b) mindestens eine Verbindung mit jeweils mindestens einer gegenüber Isocyanat reaktiven Gruppe und mindestens einer radikalisch polymerisierbaren ungesättigten Gruppe,
   (c) mindestens einen Photoinitiator mit mindestens einer gegenüber Isocyanat reaktiven Gruppe,
   (d) gegebenenfalls mindestens ein weiteres Di- und/oder Polyisocyanat, das von der Verbindung (a) verschieden ist,
   (e) gegebenenfalls mindestens eine Verbindung mit mindestens zwei gegenüber Isocyanat reaktiven Gruppen, sowie
   (f) gegebenenfalls mindestens eine Verbindung mit genau einer gegenüber Isocyanat reaktiven Gruppe
unter wasserfreien Bedingungen, wobei die Herstellung der Polyurethane (A) in Gegenwart von weniger als 1000 Gew. ppm einer Wismut-, Zink- und/oder Titan-haltigen Verbindung erfolgt und man in einem Schritt 2) das aus Schritt 1) erhaltene Polyurethan (A) mit 0,5 bis 4 Gew% Wasser, bezogen auf die Menge Polyurethan (A), vermischt.

Die bei der Herstellung der erfindungsgemäßen Polyurethane erhaltenen Reaktionsgemische weisen in der Regel ein zahlenmittleres Molgewicht Mₙ von weniger als 10000 g/mol, bevorzugt von weniger als 5000 g/mol, besonders bevorzugt von weniger als 4000 und ganz besonders bevorzugt von weniger als 2000 g/mol (bestimmt durch Gelpermeationschromatographie mit Tetrahydrofuran und Polystyrol als Standard) auf.

In einer bevorzugten Ausführungsform der Erfindung weisen die erfindungsgemäßen Polyurethane praktisch keine freien Isocyanatgruppen mehr auf, d.h. der Gehalt an freien Isocyanatgruppen beträgt weniger als 0,5 Gew%, bevorzugt weniger als 0,3, besonders bevorzugt weniger als 0,2, ganz besonders bevorzugt weniger als 0,1, insbesondere weniger als 0,05 und speziell 0 Gew%.

Bei der Komponente (a) handelt es sich um allophanatgruppenhaltige Polyisocyanate mit einer NCO Funktionalität von mindestens 2, bevorzugt von 2 bis 5 und besonders bevorzugt von 2 bis 4. Die allophanatgruppenhaltigen Polyisocyanate (a) sind aus aliphatischen C₄- bis C₂₀-Alkylendiisocyanaten aufgebaut, bevorzugt aus 1,6-Hexamethylendiisocyanat.

Besonders bevorzugt ist die Komponente (b) über Allophanatgruppen an die Komponente (a) gebunden.

Erfindungsgemäß können die Polyurethane (A) Allophanatgruppen enthalten, bevorzugt beträgt der Gehalt an Allophanatgruppen bei derartigen erfindungsgemäßen Polyurethanen (berechnet als C₂N₂HO₃ = 101 g/mol) 1 bis 28 Gew%, bevorzugt von 3 bis 25 Gew%.
In einer bevorzugten Ausführungsform der vorliegenden Erfindung sind von den Verbindungen (b) mit jeweils mindestens einer gegenüber Isocyanat reaktiven Gruppe und mindestens einer radikalisch polymerisierbaren ungesättigten Gruppe, die Aufbaukomponenten der erfindungsgemäßen Polyurethane (A) bilden, mindestens 20 mol%, bevorzugt mindestens 25 mol%, besonders bevorzugt mindestens 30 mol%, ganz besonders bevorzugt mindestens 35 mol%, insbesondere mindestens 40 mol% und speziell mindestens 50 mol% an Allophanatgruppen gebunden.

In einer besonders bevorzugten Ausführungsform handelt es sich um ein allophanatgruppenhaltiges Polyisocyanat der Formel (I) 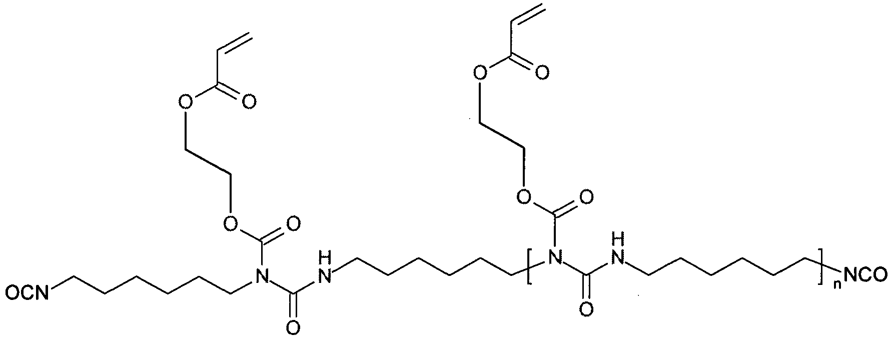 worin n eine positive Zahl ist, die im statistischen Mittel 1 bis zu 5, bevorzugt von 1 bis 3 beträgt.

Als Komponente (b) kommen erfindungsgemäß mindestens eine Verbindung (b) in Betracht, die mindestens eine gegenüber Isocyanat reaktive Gruppe und mindestens eine radikalisch polymerisierbare Gruppe trägt.

Die Verbindungen (b) weisen bevorzugt genau eine gegenüber Isocyanat reaktive Gruppe auf und 1 bis 5, besonders bevorzugt 1 bis 4 und ganz besonders bevorzugt 1 bis 3 radikalisch polymerisierbare Gruppen.

Bevorzugt weisen die Komponenten (b) ein Molgewicht unter 10000 g/mol auf, besonders bevorzugt unter 5000 g/mol, ganz besonders bevorzugt unter 4000 g/mol und insbesondere unter 3000 g/mol. Spezielle Verbindungen (b) weisen ein Molgewicht unter 1000 oder sogar unter 600 g/mol auf.

Gegenüber Isocyanat reaktive Gruppen können z.B. sein -OH, -SH, -NH₂ und -NHR¹, wobei R¹ Wasserstoff oder eine 1 bis 4 Kohlenstoffatome enthaltende Alkylgruppe, wie z.B. Methyl, Ethyl, n-Propyl, *iso*-Propyl, n-Butyl, *iso*-Butyl, *sek*-Butyl oder *tert*-Butyl, bedeutet.
Komponenten (b) können z.B. Monoester von α,β-ungesättigten Carbonsäuren, wie Acrylsäure, Methacrylsäure, Crotonsäure, Itaconsäure, Fumarsäure, Maleinsäure, Acrylamidoglykolsäure und Methacrylamidoglykolsäure sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Polyethylenglykol mit einer Molmasse zwischen 106 und 2000, Polypropylenglykol mit einem Molgewicht zwischen 134 und 2000, Poly-THF mit einem Molgewicht zwischen 162 und 2000 oder Poly-1,3-propandiol mit einem Molgewicht zwischen 134 und 400. Weiterhin können auch Ester oder Amide der (Meth)acrylsäure mit Aminoalkoholen z. B. 2-Aminoethanol, 2-(Methylamino)ethanol, 3-Amino-1-propa-nol, 1-Amino-2-propanol oder 2-(2-Amino-ethoxy)ethanol, 2-Mercaptoethanol oder Polyaminoalkane, wie Ethylendiamin oder Diethylentriamin, oder Vinylessigsäure verwendet werden.

Weiterhin sind auch ungesättigte Polyether- oder Polyesterole oder Polyacrylatpolyole mit einer mittleren OH-Funktionalität von 2 bis 10 geeignet, wenn auch weniger bevorzugt.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethylcrotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxy-propyl-(meth)acrylat, 1,4-Butandiolmono(meth)acrylat, Neopentylglykolmono(meth)acrylat, 1,5-Pentandiolmono(meth)acrylat, 1,6-Hexandiolmono(meth)acrylat, Glycerinmono- und di(meth)acrylat, Trimethylolpropanmono- und di(meth)acrylat, Pentaerythritmono-, -di- und -tri(meth)acrylat sowie 2-Amino-ethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Aminopropyl(meth)acrylamid, 3-Aminopropyl(meth)acryl-amid, 2-Hydroxyethyl(meth)acrylamid, 2-Hydroxypropyl(meth)acrylamid oder 3-Hydroxypropyl(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxypropyl(meth)acrylat sowie die Monoacrylate von Polyethylenglykol der Molmasse von 106 bis 238.
Es kann sich bei der Komponente (b) in einer bevorzugten Ausführungsform auch um technische Gemische der Acrylierung von Trimethylolpropan, Pentaerythrit, Ditrimethylolpropan oder Dipentaerythrit oder alkoxyliertem, bevorzugt propoxyliertem und/oder ethoxyliertem, besonders bevorzugt ethoxyliertem Trimethylolpropan, Pentaerythrit, Ditrimethylolpropan oder Dipentaerythrit handeln. Dabei handelt es sich zumeist um Gemische vollständig und unvollständig acrylierter Polyole, beispielsweise sind Verbindungen (b) technische Gemische der Acrylierung von Pentaerythrit, die zumeist eine OH-Zahl gemäß DIN 53240 von 99 bis 115 mg KOH/g aufweisen und überwiegend aus Pentaerythrittriacrylat und Pentaerythrittetraacrylat bestehen, sowie untergeordnete Mengen von Pentaerythritdiacrylat enthalten können. Dies hat den Vorteil, daß Pentaerythrittetraacrylat nicht in das erfindungsgemäße Polyurethan eingebaut wird, sondern gleichzeitig als Reaktivverdünner fungiert.

Bei der Komponente (c) handelt es sich um mindestens einen Photoinitiator mit mindestens einer gegenüber Isocyanat reaktiven Gruppe, bevorzugt mindestens einen Photoinitiator vom α-Hydroxyacetophenon-Typ oder Benzophenon-Typ, jeweils mit mindestens einer gegenüber Isocyanat reaktiven Gruppe, besonders bevorzugt mindestens einen Photoinitiator vom α-Hydroxyacetophenon-Typ.

Als Photoinitiator wird im Rahmen dieser Schrift eine durch elektromagnetische Strahlung, bevorzugt durch UV-Strahlung, sichtbares Licht oder IR-Strahlung, besonders bevorzugt durch UV-Strahlung oder sichtbares Licht und ganz besonders bevorzugt durch UV-Strahlung in mindestens ein Radikal spaltbare Verbindung verstanden.

Die Komponente (c) kann eine oder mehr als eine, beispielsweise 1 bis 3, bevorzugt 1 bis 2 und besonders besonders genau eine als Photoinitiator aktive Gruppe, bevorzugt α-Hydroxyacetophenon- oder Benzophenon-Gruppe, besonders bevorzugt α-Hydroxyacetophenongruppe enthalten. Weiterhin kann die Komponente (c) eine oder mehr als eine, beispielsweise 1 bis 4, bevorzugt 1 bis 3, besonders bevorzugt 1 bis 2 und ganz besonders bevorzugt genau eine gegenüber Isocyanat reaktive Gruppe enthalten.

Bei den als Photoinitiator aktiven Gruppen kann es sich bevorzugt um Hydroxybenzophenone oder Hydroxyacetophenone und besonders bevorzugt um Hydroxyacetophenone handeln.

Bevorzugte Komponenten (c) sind 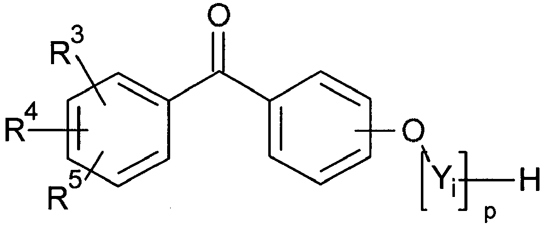 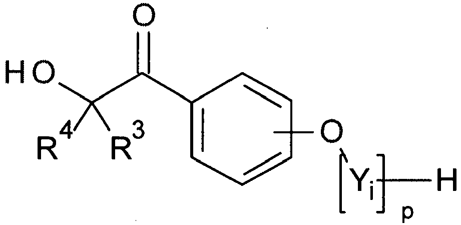 worin
R³, R⁴ und R⁵ jeweils unabhängig voneinander Wasserstoff, eine 1 bis 4 Kohlenstoffatome enthaltende Alkylgruppe, oder eine 1 bis 4 Kohlenstoffatome enthaltende Alkyloxygruppe,
p 0 (Null) oder eine ganze Zahl von 1 bis 10 sein kann und
Yᵢ für i = 1 bis p unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-.

Bevorzugt befindet sich die Gruppe -O-[-Yᵢ-]ₚ-H in para-Stellung zur Carbonylgruppe.

Bevorzugt sind die Reste R³, R⁴ und R⁵ unabhängig voneinander Wasserstoff oder Methyl, besonders bevorzugt Wasserstoff.

Bevorzugt ist p 0 bis 4, besonders bevorzugt 1 bis 3 und ganz besonders bevorzugt 1.

Bevorzugte Komponenten (c) sind 2-Hydroxy-2-methyl-1-phenyl-propan-1-on, 1-Hydroxy-cyclohexyl-phenylketon, 1-[4-[2-Hydroxyethoxy)-phenyl]-2-hydroxy-2-methyl-1-propan-1-on, 2-Hydroxy-1-{4-[4-(2-hydroxy-2-methyl-propionyl)-benzyl]-phenyl}-2-methyl-propan-1-on , 2-Hydroxy-1-[4-[hydroxy-[4-(2-hydroxy-2-methyl-propanoyl)phenyl]-methyl]phenyl]-2-methyl-propan-1-on, [4-[3-(4-benzoylphenoxy)-2-hydroxy-propoxy]-phenyl]-phenyl-methanon, Benzoin, Benzoin-*iso*-butylether, Benzoin-tetrahydropyranylether, Benzoin-methylether, Benzoin-ethylether, Benzoin-butylether, Benzoin-*iso-*propylether, 7-H-Benzoin-methylether, 2-Hydroxy-2,2-dimethylacetophenon oder 1-Hyd roxyacetophenon.

Besonders bevorzugt sind 1-[4-[2-Hydroxyethoxy)-phenyl]-2-hydroxy-2-methyl-1-propan-1-on, 2-Hydroxy-1-{4-[4-(2-hydroxy-2-methyl-propionyl)-benzyl]-phenyl}-2-methylpropan-1-on und 2-hydroxy-1-[4-[hydroxy-[4-(2-hydroxy-2-methyl-propanoyl)phenyl]-methyl]phenyl]-2-methyl-propan-1-on, ganz besonders bevorzugt ist 1-[4-[2-Hydroxy-ethoxy)-phenyl]-2-hydroxy-2-methyl-1-propan-1-on.

Bei der optionalen Komponente (d) handelt es sich um mindestens ein weiteres Di- und/oder Polyisocyanat, das von der Verbindung (a) verschieden ist. Hierbei sind auch die oben genannten Diisocyanate möglich, d.h. Verbindungen mit der Funktionalität 2.

Als Komponente (d) kommen beispielsweise aliphatische, aromatische und cycloaliphatische Di- und Polyisocyanate mit einer NCO Funktionalität von mindestens 2, bevorzugt 2 bis 5 und besonders bevorzugt mehr als 2 bis 4 in Frage.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht. Bevorzugt sind Isocyanurate, Biurete und Allophanate, besonders bevorzugt Isocyanurate und Allophanate und ganz besonders bevorzugt Allo-phanate.

Bei den Polyisocyanaten handelt es sich bevorzugt um Polyisocyanate auf Basis eines oder mehrerer Diisocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocya-nato-3,3,5-trimethyl-5-(isocyanatomethyl)cyclohexan (Isophorondiisocyanat), 1,3- oder 1,4-Bis-(isocyanatomethyl)cyclohexan oder 2,4-, oder 2,6-Diisocyanato-1-methylcyclo-hexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanato-diphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocya-nat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diiso-cyanat.

Es können auch Gemische der genannten Diisocyanate vorliegen.

Bevorzugt sind Hexamethylendiisocyanat, 1,3-Bis(isocyanatomethyl)cyclohexan, Isophorondiisocyanat und Di(isocyanatocyclohexyl)methan, besonders bevorzugt ist Hexamethylendiisocyanat.

Die einsetzbaren Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind die Polyisocyanate aufgebaut aus aliphatischen und/oder cycloaliphatischen Polyisocyanaten, z.B. die vorstehend genannten aliphatischen bzw. cycloaliphatischen Diisocyanate, oder deren Mischungen.

Als Komponente (e) kommen Verbindungen in Betracht, die mindestens zwei gegenüber Isocyanat reaktive Gruppen, beispielsweise -OH, -SH, -NH₂ oder -NHR², worin R² darin unabhängig voneinander Wasserstoff, Methyl, Ethyl, *iso*-Propyl, n-Propyl, n-Butyl, *iso*-Butyl, *sek-*Butyl oder *tert*-Butyl bedeuten kann, aufweisen.

Verbindungen (e) mit genau 2 gegenüber Isocyanat reaktiven Gruppen sind bevorzugt 2 bis 20 Kohlenstoffatome aufweisende Diole, z.B. Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Poly-THF mit einer Molmasse zwischen 162 und 2000, Poly-1,2-propandiol oder Poly-1,3-propandiol mit einer Molmasse zwischen 134 und 1178 oder Polyethylenglykol mit einer Molmasse zwischen 106 und 2000 sowie aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclohexan-bis-(methylamin), etc., Dithiole oder mehrfunktionelle Alkohole, sekundäre oder primäre Aminoalkohole, wie Ethanolamin, Monopropanolamin etc. oder Thioalkohole, wie Thioethylenglykol.

Besonders geeignet sind hier die cycloaliphatischen Diole, wie z.B. Bis-(4-hydroxycyclohexan) isopropyliden, Tetramethylcyclobutandiol, 1,2-, 1,3- oder 1,4-Cyclohexandiol, 1,1-, 1,2-, 1,3- und 1,4-Cyclohexandimethanol, Cyclooctandiol oder Norbornandiol.

Weitere Verbindungen (e) können Verbindungen mit mindestens drei gegenüber Isocyanat reaktiven Gruppen sein.

Beispielsweise können diese Komponenten 3 bis 6, bevorzugt 3 bis 5, besonders bevorzugt 3 bis 4 und ganz besonders bevorzugt 3 gegenüber Isocyanat reaktiven Gruppen aufweisen.

Das Molekulargewicht dieser Komponenten beträgt in der Regel nicht mehr als 2000 g/mol, bevorzugt nicht mehr als 1500 g/mol, besonders bevorzugt nicht mehr als 1000 g/mol und ganz besonders bevorzugt nicht mehr als 500 g/mol.

Dies sind bevorzugt 2 bis 20 Kohlenstoffatome aufweisende Polyole, beispielsweise Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, besonders bevorzugt sind Trimethylolpropan, Pentaerythrit und Glycerin und ganz besonders bevorzugt Trimethylolpropan.

Optionale Komponenten (f) sind solche mit gegebenenfalls mindestens einer Verbindung mit genau einer gegenüber Isocyanat reaktiven Gruppe. In einer bevorzugten Ausführungsform ist mindestens eine Komponente (f) anwesend.

Dabei handelt es sich bevorzugt um Monoole, besonders bevorzugt um Alkanole und ganz besonders bevorzugt um Alkanole mit 1 bis 20, bevorzugt 1 bis 12, besonders bevorzugt 1 bis 6, ganz besonders bevorzugt 1 bis 4 und insbesondere 1 bis 2 Kohlenstoffatome.

Beispiele dafür sind Methanol, Ethanol, *iso*-Propanol, n-Propanol, n-Butanol, *iso*-Butanol, *sek-*Butanol, *tert*-Butanol, n-Hexanol, n-Heptanol, n-Octanol, n-Decanol, *iso* Decanol-Isomerengemische, Undecanol, n-Dodecanol (Laurylalkohol), *iso* Tridecanol-Isomerengemische, *n* Tridecanol, Tetradecanol, Pentadecanol, Hexadecanol, Heptadecanol, Octadecanol, Nonadecanol, Eicosanol, 2-Ethylhexanol, Cyclopentanol, Cyclohexanol, Cyclooctanol, Cyclododecanol, Ethylenglykolmonomethylether, Ethylenglykolmonoethylether, Diethylenglykol, 1,3-Propandiolmonomethylether, bevorzugt sind Methanol, Ethanol, *iso*-Propanol, n-Propanol, n-Butanol, *tert*-Butanol, n-Hexanol, 2-Ethylhexanol, Cyclopentanol, Cyclohexanol, und Cyclododecanol, besonders bevorzugt sind Methanol, Ethanol, *iso*-Propanol, n-Propanol, n-Butanol und *tert-*Butanol, ganz besonders bevorzugt sind n-Propanol, und Ethanol und insbesondere Ethanol.

In einer weniger bevorzugten, aber möglichen Ausführungsform kann es sich bei den Monoolen um die genannten cycloaliphatischen Alkohole handeln, bevorzugt um Cyclopentanol oder Cyclohexanol, besonders bevorzugt um Cyclohexanol.

In einer weiteren bevorzugten Ausführungsform kann es sich bei den Monoolen um die genannten aliphatischen Alkohole mit 6 bis 20 Kohlenstoffatomen handeln, besonders bevorzugt um solche mit 8 bis 20 Kohlenstoffatomen, ganz besonders bevorzugt um solche mit 10 bis 20 Kohlenstoffatomen.

In einer besonders bevorzugten Ausführungsform handelt es sich bei den Monoolen um die genannten aliphatischen Alkohole handeln, ganz besonders bevorzugt um die mit 1 bis 4 Kohlenstoffatomen, insbesondere Ethanol.

In einer alternativen weiteren besonders bevorzugt Ausführungsform handelt es sich bei den Monoolen um alkoxylierte aliphatischen Alkohole der Formel

R⁹-O-[-Zᵢ-]_{q}-H

handeln, worin
R⁹ einen 1 bis 20 Kohlenstoffatome, bevorzugt 10 bis 20 Kohlenstoffatome aufweisenen Alkylrest,
q eine positive ganze Zahl von 1 bis 15, bevorzugt 1 bis 10 und
Zᵢ für i = 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
bedeuten.

Bei Einsatz derartiger alkoxylierter aliphatischer Alkohole als Komponente (f) in den erfindungsgemäßen Polyurethanen (A) zeigen die so erhältlichen Polyurethane (A) zusätzlich zu ihren sonstigen positiven Eigenschaften eine verbesserte Dispergierung von Pigmenten in den erfindungsgemäßen Tinten und Druckfarben, was im Druck eine erhöhte Farbdichte ermöglicht.

Die erfindungsgemäß verwendbaren Polyurethane werden durch Reaktion der Komponenten (a), (b) und (c) sowie gegebenenfalls (d) und/oder (e) und/oder (f) miteinander erhalten.

Dabei ist die molare Zusammensetzung (a):(b):(c):(d):(e):(f) pro 1 mol reaktive Isocycanatgruppen in (a) und (d) zusammen in der Regel wie folgt:
(b) 1 - 50, bevorzugt 5 - 40, besonders bevorzugt 10 - 37,5 und insbesondere 15 - 33 mol% an gegenüber Isocyanat reaktive Gruppen,
(c) 1 - 50, bevorzugt 5 - 40, besonders bevorzugt 10 - 37,5 und insbesondere 15 - 33 mol% an gegenüber Isocyanat reaktive Gruppen,
(e) 0 - 50, bevorzugt 0 - 30, besonders bevorzugt 0 - 25 und insbesondere 0 - 20 und speziell 0 mol% an gegenüber Isocyanat reaktiven Gruppen,
(f) 0 - 5, bevorzugt 0,1 - 3 und besonders bevorzugt 0,2 - 2 mol% an gegenüber Isocyanat reaktiven Gruppen,
mit der Maßgabe, daß die Summe der gegenüber Isocyanat reaktiven Gruppen der Anzahl der Isocyanatgruppen in (a) und (d) entspricht, soweit diese nicht unter Bildung von oligomeren Polyisocyanaten mit anderen Isocyanatgruppen, beispielsweise unter Bildung von Dimeren oder Trimeren, abregiert sind. Der Anteil an Isocyanatgruppen aus (d) an der Summe der Isocyanatgruppen in (a) und (d) kann beispielsweise bis zu 50% betragen, bevorzugt bis zu 25%, besonders bevorzugt bis zu 10% und ganz besonders bevorzugt 0, d.h. es ist keine Verbindung (d) anwesend.

In der bevorzugten Ausführungsform, in der ein allophanatgruppenhaltiges Polyisocyanat der Formel (I), bei dem es sich bereits um ein Addukt der Komponenten (a) und (b) handelt, zur Herstellung des erfindungsgemäßen Polyurethans (A) eingesetzt wird, ist die molare Zusammensetzung pro reaktive Isocycanatgruppen in der Verbindung der Formel (I) wie folgt:
(b) 0 bis 30 mol%, bevorzugt 0 bis 20, besonders bevorzugt 0 bis 10 und ganz besonders bevorzugt 0 mol% an gegenüber Isocyanat reaktive Gruppen,
(c) 50 bis 100 mol%, bevorzugt 60 bis 90 und besonders bevorzugt 60 bis 80 mol% an gegenüber Isocyanat reaktive Gruppen,
(d) 0 bis 30 mol%, bevorzugt 0 bis 20, besonders bevorzugt 0 bis 10 und ganz besonders bevorzugt 0 mol% Isocyanatgruppen,
(e) 0 bis 20 mol%, bevorzugt 0 bis 10, besonders bevorzugt 0 bis 50 und ganz besonders bevorzugt 0 mol% an gegenüber Isocyanat reaktive Gruppen,
(f) 0 - 20, bevorzugt 0,1 - 20 und besonders bevorzugt 0,2 - 20 mol% an gegenüber Isocyanat reaktiven Gruppen,
mit der Maßgabe, daß die Summe an gegenüber Isocyanat reaktiven Gruppen der Summe an Isocyanatgruppen entspricht.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Besonders bevorzugt wird die isocyanatgruppenhaltige Verbindung (a) sowie gegebenenfalls (d) vorgelegt und die Verbindungen, die gegenüber Isocyanat reaktive Gruppen enthalten, zugegeben. Insbesondere wird die isocyanatgruppenhaltige Verbindung (a) vorgelegt und daraufhin (b) und/oder (c), bevorzugt (b) zugegeben. Nachfolgend können gegebenenfalls gewünschte weitere Komponenten zugegeben werden.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Das erfindungsgemäße Verfahren wird durchgeführt in Gegenwart von weniger als 1000 Gew.ppm, bevorzugt weniger als 500, besonders bevorzugt weniger als 250 und ganz besonders bevorzugt weniger als 100 Gew.ppm einer Wismut-, Zink- und/oder Titan-haltigen Verbindung, bevorzugt einer Wismut- und/oder Titan-haltigen Verbindung und besonders bevorzugt einer Wismut-haltigen Verbindung.

Als Zink- und Wismutverbindungen kommen dabei solche in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₋₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei die Carboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Salze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Format, Acetat, Propionat, Hexanoat, Neodekanoat und 2-Ethylhexanoat.

Unter den Zink-Katalysatoren sind die Zink-carboxylate bevorzugt, besonders bevorzugt solche von Carboxylaten, die mindestens sechs Kohlenstoffatome, ganz besonders bevorzugt mindestens acht Kohlenstoffatome aufweisen, insbesondere Zink-(II)-diacetat oder Zink-(II)-dioctoat oder Zink-(II) neodecanoat. Handelsübliche Katalysatoren sind beispielsweise Borchi® Kat 22 von OMG Borchers GmbH, Langenfeld, Deutschland.

Unter den Wismut-Katalysatoren sind die Wismut-carboxylate bevorzugt, besonders bevorzugt solche von Carboxylaten, die mindestens sechs Kohlenstoffatome aufweisen, insbesondere Wismut-octoate, -ethylhexanoate, -neodecanoate, oder -pivalate; beispielsweise K-KAT 348, XC-B221; XC-C227, XC 8203 und XK-601 von King Industries, TIB KAT 716, 716LA, 716XLA, 718, 720, 789 von TIB Chemicals und solchen von Shepherd Lausanne, sowie beispielsweise Borchi® Kat 24; 315; 320 von OMG Borchers GmbH, Langenfeld, Deutschland.

Es kann sich dabei auch um Gemische verschiedener Metalle handeln, wie beispielsweise in Borchi® Kat 0245 von OMG Borchers GmbH, Langenfeld, Deutschland

Unter den Titanverbindungen sind die Titan tetra-alkoholate Ti(OR)₄ bevorzugt, besonders bevorzugt solche von Alkoholen ROH mit 1 bis 8 Kohlenstoffatomen, beispielsweise Methanol, Ethanol, *iso*-Propanol, n-Propanol, n-Butanol, *iso*-Butanol, *sek*-Butanol, *tert*-Butanol, n-Hexanol, n-Heptanol, n-Octanol, bevorzugt sind Methanol, Ethanol, *iso*-Propanol, n-Propanol, n-Butanol, *tert*-Butanol, besonders bevorzugt sind iso-Propanol und n-Butanol.

Im erfindungsgemäßen Verfahren wird dabei unter wasserfreien Bedingungen gearbeitet.
Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%, ganz besonders bevorzugt nicht mehr als 0,75 und insbesondere nicht mehr als 0,5 Gew%. Wird nicht wasserfrei gearbeitet besteht die Gefahr, daß unter den Reaktionsbedingungen Wasser mit den freien Isocyanatgruppen reagiert und die sich bildenden Aminogruppen Nebenreaktion verursachen, beispielsweise eine Michael-Addition an (Meth)acrylatgruppen oder mit weiteren freien Isocyanatgruppen zu schwer löslichen Biureten reagieren.

Bevorzugt wird die Reaktion in Gegenwart mindestens eines sauerstoffhaltigen Gases durchgeführt, z.B. Luft oder Luft-Stickstoff-Gemische oder Gemische aus Sauerstoff oder einem sauerstoffhaltigen Gas mit einem unter den Reaktionsbedingungen inerten Gas, die einen Sauerstoffgehalt unter 15, bevorzugt unter 12, besonders bevorzugt unter 10, ganz besonders bevorzugt unter 8 und insbesondere unter 6 Vol% aufweisen.

In einer bevorzugten Ausführungsform wird dem Reaktionsgemisch bis zu
1000 Gew.ppm mindestens eines Prozeßstabilisators zugegeben. Bevorzugte Prozeßstabilisatoren sind Phenothiazin, 2,2,6,6-Tetramethylpiperidin-N-oxyl sowie Chinonmethide.

In einer bevorzugten Ausführungsform wird die Umsetzung der isocyanatgruppenhaltigen Verbindung (a) oder des Reaktionsproduktes aus (a) und (b) mit der Verbindung (c) so durchgeführt, daß man die isocyanatgruppenhaltige Verbindung in einem Überschuß an NCO-Gruppen bezogen auf die gegenüber Isocyanat reaktiven Gruppen in (c) von mindestens 20 mol% einsetzt. Dies hat zur Folge, daß die Verbindungen (c) im wesentlichen vollständig einreagieren. Der Überschuß an Isocyanatgruppen kann anschließend mit weiterer Verbindung (b) und/oder Verbindung (f), bevorzugt mit Verbindung (f) umgesetzt werden.

Die Reaktion kann auch in Gegenwart eines inerten Solvens durchgeführt werden, z.B. Aceton, *Iso*-butyl-methylketon, Toluol, Xylol, Butylacetat, Methoxypropylacetat oder Ethoxyethylacetat. Bevorzugt wird die Reaktion jedoch in Abwesenheit eines Solvens durchgeführt.

In einer bevorzugten Ausführungsform wird die Umsetzung von (a) mit (b) und/oder (c), bevorzugt (a) und (b) unter Allophanatisierungsbedingungen durchgeführt. Darunter werden Reaktionsbedingungen verstanden, unter denen zumindest teilweise Allophanatgruppen gebildet werden, bevorzugt solche Reaktionsbedingungen, unter denen von verschiedenen konkurrierenden Reaktionen der Isocyanatgruppen mehr isocyanatgruppen zu Allophanatgruppen abreagieren als zu anderen Reaktionsprodukten.

In einer weiteren bevorzugten Ausführungsform werden solche Verbindungen eingesetzt, wie in der WO 00/39183, S.4, Z. 3 bis S. 10, Z. 19 beschrieben, deren Offenbarung hiermit Bestandteil der vorliegenden Schrift sei. Besonders bevorzugt sind unter diesen solche Verbindungen, die als Aufbaukomponenten mindestens ein Allophanatgruppen aufweisendes, (cyclo)aliphatisches Isocyanat und mindestens ein Hydroxyalkyl(meth)acrylat aufweisen, ganz besonders bevorzugt die Produkt Nr. 1 bis 9 in Tabelle 1 auf S. 24 der WO 00/39183. Ganz besonders bevorzugt handelt es sich dabei um solche Polyisocyanate der oben beschriebenen Formel (I).

Die vorliegende Beschreibung beschreibt ferner Formulierungen von einbaubaren Photoinitiatoren, bestehend aus
mindestens einem Polyurethan A, enthaltend als Aufbaukomponenten
(a) mindestens ein organisches aliphatisches, aromatisches oder cycloaliphatisches Di- oder Polyisocyanat mit einer Funktionalität von mehr als 2,
(b) mindestens eine Verbindung mit jeweils mindestens einer gegenüber Isocyanat reaktiven Gruppe und mindestens einer radikalisch polymerisierbaren ungesättigten Gruppe,
(c) mindestens einen Photoinitiator mit mindestens einer gegenüber Isocyanat reaktiven Gruppe,
(d) gegebenenfalls mindestens ein weiteres Di- und/oder Polyisocyanat, das von der Verbindung (a) verschieden ist,
(e) gegebenenfalls mindestens eine Verbindung mit mindestens zwei gegenüber Isocyanat reaktiven Gruppen,
(f) gegebenenfalls mindestens eine Verbindung mit genau einer gegenüber Isocyanat reaktiven Gruppe, optional mindestens eine multifunktionelle polymerisationsfähige Verbindung (B)
sowie 0,5 bis 4 Gew% Wasser, bezogen auf die Menge Polyurethan (A).

Der Gehalt an Wasser beträgt bevorzugt mindestens 0,75 Gew%, besonders bevorzugt mindestens 1 Gew%, ganz besonders bevorzugt mindestens 1,25 Gew% und insbesondere mindestens 1,5 Gew%, bezogen auf die Menge Polyurethan (A).

Der Gehalt an Wasser beträgt bevorzugt bis zu 3,5 Gew%, besonders bevorzugt bis zu 3 Gew%, bezogen auf die Menge Polyurethan (A).

Diese Formulierungen sind in der Regel lagerstabil und entmischen sich nicht.

Es stellt einen Vorteil dieser Formulierungen dar, daß durch die Beimischung der genannten Menge Wasser die Viskosität des Polyurethans (A) verringert werden kann. In der Regel beträgt die Viskosität gemessen gemäß DIN EN ISO 3219 (Scherrate D, 100 s⁻¹) bei 23°C nicht mehr als 400 Pas, so daß die Formulierung fließfähig ist. Bevorzugt beträgt die Viskosität weniger als 300, besonders bevorzugt weniger als 250 Pas und ganz besonders bevorzugt weniger als 200 Pas.

Die Formulierung kann als Lösung oder Dispersion vorliegen, bevorzugt als Lösung von Wasser in dem Polyurethan (A). Zur Vermischung wird die Menge Wasser gegebenenfalls portionsweise in das Polyurethan (A) unter Energieeintrag eingetragen. Es ist jedoch auch möglich, daß das Polyurethan (A) zu Wasser hinzugegeben wird.
Die Vermischung kann beispielsweise durch Rühren, statische Mischer oder Ultraschall erfolgen, bevorzugt durch Rühren.

Die Polyurethane (A) und die erfindungsgemäßen Formulierungen von einbaubaren Photoinitiatoren können bevorzugt in erfindungsgemäßen Tinten, Druckfarben und Drucklacken eingesetzt werden.

Ein weiterer Gegenstand der vorliegenden Erfindung sind Tinten, Druckfarben und Drucklacke, enthaltend
mindestens ein Polyurethan A, enthaltend als Aufbaukomponenten
(a) mindestens ein organisches aliphatisches, aromatisches oder cycloaliphatisches Di- oder Polyisocyanat mit einer Funktionalität von mehr als 2,
(b) mindestens eine Verbindung mit jeweils mindestens einer gegenüber Isocyanat reaktiven Gruppe und mindestens einer radikalisch polymerisierbaren ungesättigten Gruppe,
(c) mindestens einen Photoinitiator mit mindestens einer gegenüber Isocyanat reaktiven Gruppe,
(d) gegebenenfalls mindestens ein weiteres Di- und/oder Polyisocyanat, das von der Verbindung (a) verschieden ist,
(e) gegebenenfalls mindestens eine Verbindung mit mindestens zwei gegenüber Isocyanat reaktiven Gruppen,
(f) gegebenenfalls mindestens eine Verbindung mit genau einer gegenüber Isocyanat reaktiven Gruppe
sowie zusätzlich zum Polyurethan (A)
0,5 bis 4 Gew% Wasser, bezogen auf die Menge Polyurethan (A),
optional mindestens ein Pigment,
mindestens eine multifunktionelle polymerisationsfähige Verbindung (B),
optional mindestens einen weiteren Photoinitiator, sowie
optional druckfarbentypische Additive.

Die erfindungsgemäßen Drucklacke enthalten kein Pigment.

Der mindestens eine weitere Photoinitiator ist bevorzugt anwesend bei pigmentierten Druckfarben und bei Drucklacken.

Unter dem Begriff "Druckfarbe" wird in dieser Anmeldung als Sammelbezeichnung für farbmittelhaltige Zubereitungen mit unterschiedlicher Konsistenz, die ausschließlich mittels einer Druckform auf einen Bedruckstoff übertragen und dort als Farbfilm (Druck) fixiert werden (CEPE-Definition).

Dem deutschen Sprachgebrauch folgend wird der Begriff "Tinte" in dieser Anmeldung ausschließlich für Farbflüssigkeiten für Ink-Jet-Flüssigkeit sowie für Flüssigtoner für elektrophotographische Druckverfahren verwendet.

Die erfindungsgemäßen Tinten, Druckfarben und Drucklacke können verwendet werden zum Bedrucken von verschiedenen Substraten, bevorzugt Polyamiden, Polethylen, Polypropylen, Polyestern, Poylethylenterephthalat, Polystyrol, Papier, Pappe, Karton, kunststoffbeschichtetes Papier, kunststoffbeschichtete Pappe oder kunststoffbeschichteter Karton, Aluminium und aluminiumbeschichteten Kunststofffolien, bevorzugt von Polethylen, Polypropylen und Polyestern sowie Papier und Karton

Sind Papier, Pappe oder Karton kunststoffbeschichtet, so handelt es sich bei dem Kunststoff bevorzugt um Polyolefine, besonders bevorzugt um Polyethylen oder Polypropylen.

Die so bedruckten Substrate sind insbesondere geeignet als Verpackungsmaterialien für Lebensmittel, Kosmetik und Arzneimittel.

Die erfindungsgemäßen Polyurethane (A) können als alleiniges Bindemittel oder bevorzugt in Kombination mit mindestens einer weiteren radikalisch polymerisierbaren Verbindung verwendet werden.

Radikalisch polymerisationsfähige Gruppen sind beispielsweise bevorzugt (Meth)Acrylat-Gruppen und besonders bevorzugt Acrylat-Gruppen.

Bei den radikalisch polymerisationsfähige Verbindungen (B) handelt es sich bevorzugt um multifunktionelle (Verbindung mit mehr als einer radikalisch polymerisierbaren Doppelbindung) polymerisationsfähige Verbindungen.

(Meth)Acrylsäure steht in dieser Schrift für Methacrylsäure und Acrylsäure, bevorzugt für Acrylsäure.

Multifunktionelle, polymerisationsfähige Verbindungen sind bevorzugt multifunktionelle (Meth)acrylate, die mindestens 2, bevorzugt 2-10, besonders bevorzugt 3 - 6 und ganz besonders bevorzugt 3 - 4 (Meth)acrylatgruppen, bevorzugt Acrylatgruppen tragen.

Beispiele für multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Diproyplengylkoldiacrylat,Tripropylenglykoldiacrylat, Trimethylolpropantriacrylat, Ditrimethylolpropantetraacrylat, Dipentaerythritpenta- oder -hexaacrylat, Pentaerythrittri- oder -tetraacrylat, Glycerindi- oder - triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, oder von Polyesterpolyolen, Polyetherolen, Poly-THF mit einer Molmasse zwischen 162 und 2000, Poly-1,3-Propandiol mit einer Molmasse zwischen 134 und 1178, Polyethylenglykol mit einer Molmasse zwischen 106 und 898, sowie Epoxy(meth)acrylate, , Polyester(meth)acrylate, Polyether(meth)acrylate, Urethan-(meth)acrylate oder Polycarbonat(meth)acrylate, die optional auch mit einem oder mehreren Aminen modifiziert sein können.

Weitere Beispiele sind (Meth)Acrylate von Verbindungen der Formel (VIIIa) bis (Vllld), 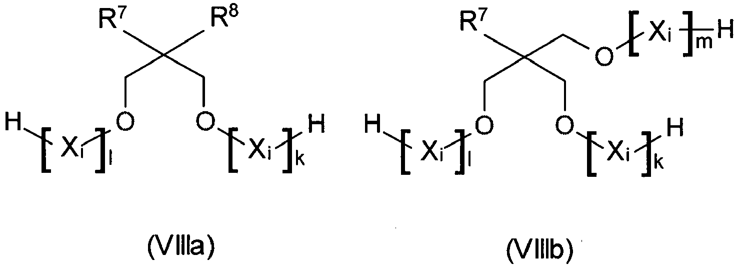 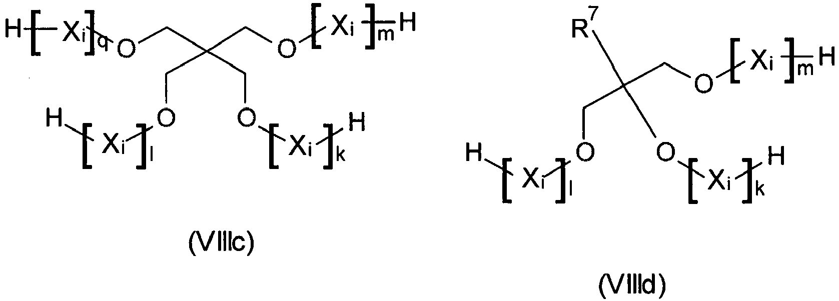 worin
R⁷ und R⁸ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
k, l, m, q unabhängig voneinander je für eine ganze Zahl von 1 bis 10, bevorzugt 1 bis 5 und besonders bevorzugt 1 bis 3 steht und
jedes Xᵢ für i = 1 bis k, 1 bis I, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bevorzugte multifunktionelle, polymerisationsfähige Verbindungen sind, 1,2-Propandioldiacrylat, 1,3-Propandioldiacrylat, Diproyplengylkoldiacrylat, Tripropylenglykoldiacrylat, Trimethylolpropantriacrylat, Ditrimethyloltetracrylat und Dipentaerithrolhexaacrylat, Polyesterpolyolacrylate, Polyetherolacrylate und Triacrylat von ein- bis zwanzigfach alkoxyliertem, besonders bevorzugt ein- bis 20fach ethoxyliertem Trimethylolpropan, ein- bis 20fach propoxyliertem Glycerin oder ein- bis 20fach ethoxyliertem und/oder propoxyliertem Pentaerythrit.

In einer bevorzugten Ausführungsform werden in Drucklacken Epoxy(meth)acrylate als multifunktionelle, polymerisationsfähige Verbindungen eingesetzt.

Ganz besonders bevorzugte multifunktionelle, polymerisationsfähige Verbindungen sind Trimethylolpropantriacrylat und Triacrylat von ein- bis zwanzigfach ethoxyliertem Trimethylolpropan, Triacrylat von ein- bis 20fach propoxyliertem Glycerin oder Tetraacrylat von ein- bis 20fach ethoxyliertem und/oder propoxyliertem Pentaerythrit. Weitere Bestandteile können auch teilweise oder vollständig mit (Meth)Acrylsäure veresterte Polyalkohole sein.

Derartige Polyalkohole sind beispielsweise mindestens zweiwertige Polyole, Polyetherole oder Polyesterole oder Polyacrylatpolyole mit einer mittleren OH-Funktionalität von mindestens 2, bevorzugt mindestens 3, besonders bevorzugt mindestens 4 und ganz besonders bevorzugt 4 bis 20.

Polyetherole können zusätzlich zu den alkoxylierten Polyolen auch Polyethylenglykol mit einer Molmasse zwischen 106 und 2000, Polypropylenglykol mit einem Molgewicht zwischen 134 und 2000, Poly-THF mit einem Molgewicht zwischen 162 und 2000 oder Poly-1,3-propandiol mit einem Molgewicht zwischen 134 und 400 sein.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:

Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Polyethylenglykol mit einer Molmasse zwischen 106 und 2000, Polypropylenglykol mit einem Molgewicht zwischen 134 und 2000, Poly-THF mit einem Molgewicht zwischen 162 und 2000, Poly-1,3-propandiol mit einem Molgewicht zwischen 134 und 400, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Weiterhin kann es sich bei der multifunktionellen, polymerisationsfähigen Verbindung um Urethan(meth)acrylate, Epoxy(meth)acrylate oder Carbonat(meth)acrylate handeln.

Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan(meth)acrylate enthalten zusätzlich noch ionische und/oder nichtionische hydrophile Gruppen, welche z.B. durch Aufbaukomponenten wie Hydroxycarbonsäuren ins Urethan eingebracht werden.

Derartige Urethan(meth)acrylate enthalten als Aufbaukomponenten im wesentlichen:
(1) mindestens ein organisches aliphatisches, aromatisches oder cycloaliphatisches Di- oder Polyisocyanat,
(2) mindestens eine Verbindung mit mindestens einer gegenüber Isocyanat reaktiven Gruppe und mindestens einer radikalisch polymerisierbaren ungesättigten Gruppe und
(3) gegebenenfalls mindestens eine Verbindung mit mindestens zwei gegenüber Isocyanat reaktiven Gruppen.

Die Komponenten (1), (2) und (3) können die gleichen sein, wie oben als Aufbaukomponenten (a), (b) und (e) für die erfindungsgemäßen Polyurethane beschrieben.

Die Urethan(meth)acrylate haben vorzugsweise ein zahlenmittleres Molgewicht Mₙ von 500 bis 20 000, insbesondere von 500 bis 10 000 besonders bevorzugt 600 bis 3000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Epoxid(meth)acrylate sind erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, *iso*-Butylenoxid, 1-Butenoxid, 2-Butenoxid, Vinyloxiran, Styroloxid oder Epichlorhydrin, bevorzugt sind Ethylenoxid, Propylenoxid, *iso*-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-E-poxypropoxy)phenyl]octahydro-4,7-methano-5H-inden) (CAS-Nr. [13446-85-0]), Tris[4-(2,3-epoxypropoxy)phenyl]methan Isomere)CAS-Nr. [66072-39-7]), Phenol basierte Epoxy Novolake (CAS-Nr. [9003-35-4]) und Kresol basierte Epoxy Novolake (CAS-Nr. [37382-79-9]).

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Die Epoxid(meth)acrylate haben vorzugsweise ein zahlenmittleres Molgewicht Mₙ von 200 bis 20000, besonders bevorzugt von 200 bis 10000 g/mol und ganz besonders bevorzugt von 250 bis 3000 g/mol; der Gehalt an (Meth)acrylgruppen beträgt vorzugsweise 1 bis 5, besonders bevorzugt 2 bis 4 pro 1000 g Epoxid(meth)acrylat (bestimmt durch Gelpermeationschromatographie mit Polystyrol als Standard und Tetrahydrofuran als Elutionsmittel).

Carbonat(meth)acrylate enthalten im Mittel vorzugsweise 1 bis 5, insbesondere 2 bis 4, besonders bevorzugt 2 bis 3 (Meth)acrylgruppen und ganz besonders bevorzugt 2(Meth)acrylgruppen.

Das zahlenmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermeationschromatgraphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

Denkbar sind auch (Meth)acrylate von Polycarbonatpolyolen, wie das Reaktionsprodukt aus einem der genannten Di- oder Polyole und einem Kohlensäureester sowie einem hydroxylgruppenhaltigen (Meth)acrylat.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl-(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Besonders bevorzugte Carbonat(meth)acrylate sind solche der Formel: 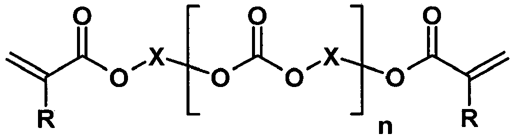 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

Unter den multifunktionellen, polymerisationsfähigen Verbindung sind Urethan(meth)-acrylate besonders bevorzugt.

Es kann sinnvoll sein, den erfindungsgemäßen Tinten, Druckfarben und Drucklacken zusätzlich zu dem Polyurethan (A) zusätzlich Photoinitiator zuzusetzen, bevorzugt Photoinitiator, der ein anderes Absorptionsmaximum als die Komponente (c) aufweist.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO der BASF SE), Ethyl-2,4,6-trimethylbenzoylphenylphosphinat (Lucirin® TPO L der BASF SE), Bis-(2,4,6-trimethylbenzoyl)-phenylphosphinoxid (Irgacure® 819 der BASF SE), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert*-Butylanthrachinon, Anthrachinoncarbonysäureester, Benzaldehyd, α-Tetralon, 9-Acetylphenanthren, 2-Acetylphenanthren, 10-Thioxanthon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzoin-tetrahydropyranylether, Benzoin-methylether, Benzoin-ethylether, Benzoin-butylether, Benzoin-*iso*-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, 2-hydroxy-1-[4-[[4-(2-hydroxy-2-methyl-propanoyl)phenyl]methyl]phenyl]-2-methyl-propan-1-on,2-Benzyl-2-dimethylamino-4'-morpholinobutyrophenon, 2-(Dimethylamino)-1-(4-morpholinophenyl)-2-(p-tolylmethyl)butan-1-on, 2-Methyl-1-(4-methylthiophenyl)-2-morpholinopropan-1-on, Triphenylphosphin, Tri-o-Tolylphosphin, Benz[a]anthracen-7,12-dion, 2,2-Diethoxyacetophenon, Benzilketale, wie Benzildimethylketal, Anthrachinone wie 2-Methylanthrachinon, 2-Ethylanthrachinon, 2-*tert*-Butyl-anthrachinon, 1-Chloranthrachinon, 2-Amylanthrachinon und 2,3-Butandion.

Denkbar als Photoinitiatoren sind ebenfalls polymere Photoinitiatoren, wie beispielsweise der Diester von Carboxymethoxybenzophenon mit Polytetramethylenglykolen unterschiedlichen Molgewichts, bevorzugt 200 bis 250 g/mol (CAS 515136-48-8), sowie CAS 1246194-73-9, CAS 813452-37-8, CAS 71512-90-8, CAS 886463-10-1 oder weitere polymere Benzophenonderivate, wie sie beispielsweise unter dem Handelsnamen Omnipol® BP der Firma IGM Resins B.V., Waalwijk, Niederlande oder Genopol® BP1 der Firma Rahn AG, Schweiz im Handel verfügbar sind. Denkbar sind ferner auch polymere Thioxanthone, beispielsweise der Diester von Carboxymethoxythioxanthonen mit Polytetramethylenglykolen unterschiedlichen Molgewichts, wie sie beispielsweise unter dem Handelsnamen Omnipol® TX der Firma IGM Resins B.V., Waalwijk, Niederlande im Handel verfügbar sind. Denkbar sind ferner auch polymere α-Aminoketone, beispielsweise der Diester von Carboxyethoxythioxanthonen mit Polyethylenglykolen unterschiedlichen Molgewichts, wie sie beispielsweise unter dem Handelsnamen Omnipol® 910 oder Omnipol® 9210 der Firma IGM Resins B.V., Waalwijk, Niederlande im Handel verfügbar sind.

In einer bevorzugten Ausführungsform werden als Photoinitiatoren Silsesquioxanverbindungen mit mindestens einer initiierend wirkenden Gruppe eingesetzt, wie sie beschrieben sind in WO 2010/063612 A1, dort besonders von Seite 2, Zeile 21 bis Seite 43, Zeile 9, was hiermit per Bezugnahme Bestandteil der vorliegenden Offenbarung sei, bevorzugt von Seite 2, Zeile 21 bis Seite 30, Zeile 5 sowie den in den Beispiele der WO 2010/063612 A1 beschriebenen Verbindungen.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschriebene Silsesquioxanverbindungen.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, 2-Benzyl-2-dimethylamino-4'-morpholinobutyrophenon, 2-(Dimethylamino)-1-(4-morpholinophenyl)-2-(p-tolylmethyl)butan-1-on, 2-Hydroxy-1-[4-[[4-(2-hydroxy-2-methyl-propanoyl)phenyl]methyl]phenyl]-2-methyl-propan-1-on sowie die oben beschriebenen polymeren Thioxanthon- und Benzophenonderivate sowie die in WO 2010/063612 A1 beschriebenen.

Als weitere druckfarbentypische Additive können beispielsweise Dispergiermittel, Wachse, Stabilisatoren, Sensibilisatoren, Füllmittel, Entschäumer, Farbstoffe, antistatische Agentien, Verdicker, oberflächenaktive Agentien wie Verlaufsmittel, Slip-aids oder Haftvermittler verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Im Folgenden sind Beispiele für besonders gut geeignete Pigmente genannt.

### Organische Pigmente:

- Monoazopigmente: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- Disazopigmente: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
- Anthanthronpigmente: C.I. Pigment Red 168 (C.I. Vat Orange 3);
- Anthrachinonpigmente: C.I. Pigment Yellow 147 und 177; C.I. Pigment Violet 31;
- Anthrachinonpigmente: C.I. Pigment Yellow 147 und 177; C.I. Pigment Violet 31;
- Anthrapyrimidinpigmente: C.I. Pigment Yellow 108 (C.I. Vat Yellow 20);
- Chinacridonpigmente: C.I. Pigment Red 122, 202 und 206; C.I. Pigment Violet 19;
- Chinophthalonpigmente: C.I. Pigment Yellow 138;
- Dioxazinpigmente: C.I. Pigment Violet 23 und 37;
- Flavanthronpigmente: C.I. Pigment Yellow 24 (C.I. Vat Yellow 1);
- Indanthronpigmente: C.I. Pigment Blue 60 (C.I. Vat Blue 4) und 64 (C.I. Vat Blue 6);
- Isoindolinpigmente: C.I. Pigment Orange 69; C.I. Pigment Red 260; C.I. Pigment Yellow 139 und 185;
- Isoindolinonpigmente: C.I. Pigment Orange 61; C.I. Pigment Red 257 und 260; C.I. Pigment Yellow 109, 110, 173 und 185;
- Isoviolanthronpigmente: C.I. Pigment Violet 31 (C.I. Vat Violet 1);
- Metallkomplexpigmente: C.I. Pigment Yellow 117, 150 und 153; C.I. Pigment Green 8;
- Perinonpigmente: C.I. Pigment Orange 43 (C.I. Vat Orange 7); C.I. Pigment Red 194 (C.I. Vat Red 15);
- Perylenpigmente: C.I. Pigment Black 31 und 32; C.I. Pigment Red 123, 149, 178, 179 (C.I. Vat Red 23), 190 (C.I. Vat Red 29) und 224; C.I. Pigment Violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51; C.I. Pigment Red 216 (C.I. Vat Orange 4);
- Thioindigopigmente: C.I. Pigment Red 88 und 181 (C.I. Vat Red 1); C.I. Pigment Violet 38 (C.I. Vat Violet 3);
- Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz); C.I. Pigment Yellow 101 (Aldazingelb); C.I. Pigment Brown 22.

### Anorganische Pigmente:

- Weißpigmente: Titandioxid (C.I. Pigment White 6), Zinkweiß, Farbenzinkoxid, Bariumsulfat, Zinksulfid, Lithopone; Bleiweiß; Calziumcarbonat;
- Schwarzpigmente: Eisenoxidschwarz (C.I. Pigment Black 11), Eisen-ManganSchwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau; Ultramarinviolett; Kobalt- und Manganviolett; Eisenoxidrot (C.I. Pigment Red 101); Cadmiumsulfoselenid (C.I. Pigment Red 108); Molybdatrot (C.I. Pigment Red 104); Ultramarinrot;
   Eisenoxidbraun, Mischbraun, Spinell- und Korundphasen (C.I. Pigment Brown 24, 29 und 31), Chromorange;
   Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente (B) sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente, Weißpigmente und Ruße zu nennen.

Beispiele für besonders bevorzugte Pigmente sind im einzelnen: Ruß, Titandioxid, C.I. Pigment Yellow 138, C.I. Pigment Red 122 und 146, C.I. Pigment Violet 19, C.I. Pigment Blue 15:3 und 15:4, C.I. Pigment Black 7, C.I. Pigment Orange 5, 38 und 43 und C.I. Pigment Green 7.

Geeignete Stabilisatoren umfassen typische UV-Absorber wie Oxanilide, Triazine und Benzotriazol (letztere erhältlich als Tinuvin® -Marken der BASF) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, oder Chinonmethide (wie Irgastab® UV 22) eingesetzt werden. Stabilisatoren werden üblicherweise in Mengen von 0,1 bis 0,5 Gew.-%, der Wirkstoffkomponente, bezogen auf die Zubereitung, eingesetzt.

Ein weiterer Aspekt der vorliegenden Erfindung ist ein Verfahren zum Bedrucken von flächigen oder dreidimensionalen, bevorzugt flächigen Substraten nach einem beliebigen Druckverfahren unter Verwendung von mindestens einer erfindungsgemäßen Druckfarbe. In einer bevorzugten Variante des erfindungsgemäßen Druckverfahrens druckt man mindestens eine erfindungsgemäße Druckfarbe auf ein Substrat und behandelt anschließend mit aktinischer Strahlung, beispielsweise UV-Strahlung und/oder Elektronenstrahlen, bevorzugt UV-Strahlung.

Druckverfahren, in denen die erfindungsgemäßen Druckfarben eingesetzt werden können sind bevorzugt Offsetdruck, Hochdruck, Flexodruck, Tiefdruck, Siebdruck und Tintenstrahldruck besonders bevorzugt sind Flexodruck und Offsetdruck.

Bei den sogenannten mechanischen Druckverfahren wie Offsetdruck, Hochdruck, Flexodruck oder Tiefdruck wird die Druckfarbe durch Kontakt einer mit Druckfarbe versehenen Druckplatte oder Druckform mit dem Bedruckstoff auf den Bedruckstoff übertragen. UV härtbare Druckfarben für diese Anwendungen umfassen üblicherweise Reaktivverdünner , Bindemittel, Farbmittel, Initiatoren sowie ggf. verschiedene Additive. Bindemittel dienen zur Bildung des Farbfilms und der Verankerung der Bestandteile wie beispielsweise Pigmente oder Füllstoffe im Farbfilm. Je nach Konsistenz enthalten Druckfarben für diese Anwendungen üblicherweise zwischen 10 und 60 Gew. % Bindemittel. Reaktivverdünner dienen zur Einstellung der Verarbeitungsviskosität.

Drucklacke werden entweder als Grundierung auf den Bedruckstoff aufgetragen (sogenannte "primer") oder nach dem Druckvorgang als Überzug auf den bedruckten Bedruckstoff aufgetragen. Drucklacke werden beispielsweise zum Schutz des Druckbildes, zur Verbesserung der Haftung der Druckfarbe auf dem Bedruckstoff oder zu ästhetischen Zwecken eingesetzt. Die Auftragung erfolgt üblicherweise in-line oder offline mittels eines Lackierwerkes an der Druckmaschine.

Drucklacke enthalten kein Farbmittel, sind aber abgesehen davon im Regelfalle ähnlich wie Druckfarben zusammengesetzt, und zeichnen sich durch die Abwesenheit des Farbmittels aus.

Druckfarben für mechanische Druckverfahren umfassen so genannte pastöse Druckfarben mit hoher Viskosität für den Offset-und Hochdruck sowie so genannte Flüssigdruckfarben mit vergleichsweise niedriger Viskosität für den Flexo- und Tiefdruck.

Die erfindungsgemäßen Tinten können beispielsweise eingesetzt werden als Ink-Jet-Flüssigkeit sowie für Flüssigtoner für elektrophotographische Druckverfahren.

Gegebenenfalls kann, wenn mehrere Druckschichten der Druckfarben übereinander aufgetragen werden, nach jedem Druckvorgang eine Trocknung und/oder Strahlungshärtung erfolgen.

Die Strahlungshärtung erfolgt mit energiereichem Licht, z.B. UV-Licht oder Elektronenstrahlen. Die Strahlungshärtung kann auch bei höheren Temperaturen erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler sowie UV-LEDs. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 420 nm, oder durch Bestrahlung mit energiereichen Elektronen (Elektronenstrahlung; 60 bis 300 keV). Als Strahlungsquellen dienen beispielsweise Hochdruckquecksilberdampflampen, Laser, gepulste Lampen (Blitzlicht), Halogenlampen, UV-LEDs oder Excimerstrahler. Die üblicherweise zur Vernetzung ausreichende Strahlungsdosis bei UV-Härtung liegt im Bereich von 30 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase.

Es stellt einen Vorteil der Polyurethane (A) und des erfindungsgemäßen Verfahrens dar, daß sich mit diesen Tinten, Druckfarben und Drucklacke herstellen lassen, deren Gehalt an extrahierbaren und/oder migrierbaren Bestandteilen verringert ist. Da der Photoinitiator in die erfindungsgemäßen Polyurethane eingebaut ist,. sind auch die Abbauprodukte der Photoinitiatoren zusätzlich in der Beschichtung fixiert, so daß sie in der Regel nicht oder wenig migrationsfähig sind. Dies hat zur Folge, daß mit den erfindungsgemäßen Polyurethanen wenig oder kein migrationsfähiger Anteil von Abbauprodukten von Photoinitiatoren, beispielsweise durch Extraktion der erhaltenen Beschichtungen, gefunden wird, wenn man diese mit Beschichtungen vergleicht, in denen der Zusatz von niedermolekularen, d.h. nicht einbaubaren Photoinitiatoren erforderlich ist. Durch den Verzicht auf Zinn als Katalysator in der Herstellung der Polyurethane (A) werden toxikologisch bedenkliche Metalle vermieden. Zudem ist die Viskosität der erfindungsgemäßen Formulierungen, Tinten, Drucklacken und Druckfarben in der Regel relativ gering, da die Polyurethane bevorzugt Allophanatgruppen aufweisen. Zusätzlich ist durch den Anteil an Wasser eine niedrigviskose Formulierung herstellbar, die die Einarbeitbarkeit der Polyurethane (A) in Tinten, Drucklacken und Druckfarben erleichtert.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Beispiele

Bei Laromer^{®} LR 8863 der BASF SE, Ludwigshafen, handelt es sich um ein handelsübliches Triacrylat von im statistischen Mittel 3,5-fach ethoxyliertem Trimethylolpropan.

Bei Laromer® 9000 der BASF SE, Ludwigshafen, handelt es sich um ein handelsübliches, allophanatgruppenhaltiges Polyisocyanat der obigen Formel (I), in dem Acrylatgruppen über Allophanatgruppen gebunden sind. Der NCO-Gehalt beträgt 14,5 bis 15,5 Gew%.

Bei Irgacure^{®} 2959 der BASF SE, Ludwigshafen, handelt es sich um einen handelsüblichen Photoinitiator vom α-Hydroxyketon-Typ (1-[4-(2-Hydroxyethoxy)-phenyl]-2-hydroxy-2-methyl-1-propan-1-on).

Bei Irgastab^{®} UV22 der BASF SE, Ludwigshafen, handelt es sich um einen handelsüblichen Stabilisator aus Chinonmethid, gelöst in einem Acrylat von propoxyliertem Glycerin.

### Beispiel 1:

86 Teile eines Polyetheracrylates (Laromer^{®} LR 8863), 120 Teile eines Isocyanatoacrylats (Laromer^{®} LR9000), 79 Teile eines Photoinitiators (Irgacure^{®} 2959), 0,1 Teile Borchi® Kat 24 (Wismut carboxylat) und 0,9 Teile eines weiteren Stabilisators (Irgastab^{®} UV22) wurden in einem Reaktionskolben vorgelegt und auf 80°C erhitzt. Dann ließ man bei 80-85°C so lange reagieren bis der NCO Wert auf < 0,8% abgefallen war, gab die auf NCO berechnete equivalente Menge Ethanol zu, und ließ weiterreagieren bis der NCO Wert auf 0 abgefallen war. Dann ließ man abkühlen, gab 3% Wasser zu und füllte ab.

### Beispiel 1 a:

86 Teile eines Polyetheracrylates (Laromer^{®} LR 8863), 100 Teile eines Isocyanatoacrylats (Laromer^{®} LR9000), 79 Teile eines Photoinitiators (Irgacure^{®} 2959), 0,1 Teile Borchi® Kat 24 (Wismut carboxylat) und 0,9 Teile eines weiteren Stabilisators (Irgastab^{®} UV22) wurden in einem Reaktionskolben vorgelegt und auf 80°C erhitzt. Dann ließ man bei 80-85°C so lange reagieren bis der NCO Wert auf < 0,8% abgefallen war, gab die auf NCO berechnete equivalente Menge Ethanol zu, und ließ weiterreagieren bis der NCO Wert auf 0 abgefallen war. Dann ließ man abkühlen, gab 3% Wasser zu und füllte ab. Das GPC Spektrum zeigt, dass noch ca. 6% nicht umgesetztes Irgacure® 2959 vorhanden sind.

### Vergleichsbeispiel 1:

86 Teile eines Polyetheracrylates (Laromer® LR 8863), 120 Teile eines Isocyanatoacrylats (Laromer^{®} LR9000), und 79 Teile eines Photoinitiators (Irgacure^{®} 2959) wurden in einem Reaktionskolben vorgelegt und auf 80°C erhitzt. Dann ließ man bei 80-85°C weiterreagieren, um den NCO Wert auf < 0,8% zu bringen. Nach ca. 20 Stunden war der Photoinitiator noch nicht vollständig umgesetzt. Bevor der Wert jedoch < 0,8% erreichte (ca. 12 h), trat Vernetzung ein.

Vergleichsbeispiel 1 zeigt, daß es erforderlich ist mit einer Komponente (f) die freien NCO-Gruppen umzusetzen.

### Vergleichsbeispiel 2:

86 Teile eines Polyetheracrylates (Laromer^{®} LR 8863), 120 Teile eines Isocyanatoacrylats (Laromer^{®} LR9000), 79 Teile eines Photoinitiators (Irgacure^{®} 2959) und 0,9 Teile eines weiteren Stabilisators (Irgastab^{®} UV22) wurden in einem Reaktionskolben vorgelegt und auf 80°C erhitzt. Dann ließ man bei 80-85°C so lange reagieren bis der NCO Wert auf < 0,8% abgefallen war, gab die auf NCO berechnete equivalente Menge Ethanol zu, und ließ weiterreagieren bis der NCO Wert auf 0 abgefallen war. Dann ließ man abkühlen und gab 5% Wasser zu. Das Reaktionsgemisch wurde trüb.

Vergleichsbeispiel 2 zeigt, daß die erfindungsgemäßen Formulierungen bei Zugabe von zuviel Wasser eintrüben.

### Beispiel 2:

86 Teile eines Polyetheracrylates (Laromer^{®} LR 8863), 120 Teile eines Isocyanatoacrylats (Laromer^{®} LR9000), 79 Teile eines Photoinitiators (Irgacure^{®} 2959) 50 ppm Borchi® Kat 24 (Bismut carboxylat) und 0,015 Teile eines weiteren Stabilisators (Irgastab^{®} UV22) wurden in einem Reaktionskolben vorgelegt und auf 80°C erhitzt. Dann ließ man bei 80-85°C so lange reagieren bis der NCO Wert auf < 0,8% abgefallen war, gab die auf NCO berechnete equivalente Menge Ethanol zu, und ließ weiterreagieren bis der NCO Wert auf 0 abgefallen war. Das GPC Chromatogramm zeigte eine vollständige Umsetzung des Photoinitiators. Dann gab man ein weiteres Teil des Stabilisators UV22 zu, ließ abkühlen, gab 2% Wasser zu und füllte ab.

### Beispiel 3:

86 Teile eines Polyetheracrylates (Laromer^{®} LR 8863), 120 Teile eines Isocyanatoacrylats (Laromer^{®} LR9000), 79 Teile eines Photoinitiators (Irgacure^{®} 2959) 50 ppm Borchi® Kat22 (Zink carboxylat) und 0,015 Teile eines weiteren Stabilisators (Irgastab^{®} UV22) wurden in einem Reaktionskolben vorgelegt und auf 80°C erhitzt. Dann ließ man bei 80-85°C so lange reagieren bis der NCO Wert auf < 0,8% abgefallen war, gab die auf NCO berechnete equivalente Menge Ethanol zu, und ließ weiterreagieren bis der NCO Wert auf 0 abgefallen war. Das GPC Chromatogramm zeigte eine vollständige Umsetzung des Photoinitiators. Dann gab man 1,5 weitere Teile des Stabilisators UV22 zu, ließ abkühlen, gab 2% Wasser zu und füllte ab.

### Beispiel 4:

86 Teile eines Polyetheracrylates (Laromer^{®} LR 8863), 120 Teile eines Isocyanatoacrylats (Laromer^{®} LR9000), 79 Teile eines Photoinitiators (Irgacure^{®} 2959), 50 ppm Tetrabutyl ortho Titanat und 0,015 Teile eines weiteren Stabilisators (Irgastab^{®} UV22) wurden in einem Reaktionskolben vorgelegt und auf 80°C erhitzt. Dann ließ man bei 80-85°C so lange reagieren bis der NCO Wert auf < 0,8% abgefallen war, gab die auf NCO berechnete equivalente Menge Ethanol zu, und ließ weiterreagieren bis der NCO Wert auf 0 abgefallen war. Das GPC Chromatogramm zeigte eine vollständige Umsetzung des Photoinitiators. Dann gab man 1,5 weitere Teile des Stabilisators UV22 zu, ließ abkühlen, gab 2% Wasser zu und füllte ab.

### Beispiel 5:

86 Teile eines Polyetheracrylates (Laromer^{®} LR 8863), 120 Teile eines Isocyanatoacrylats (Laromer^{®} LR9000), 79 Teile eines Photoinitiators (Irgacure^{®} 2959) 50 ppm Borchi® Kat 315 Bismut carboxylat) und 0,015 Teile eines weiteren Stabilisators (Irgastab^{®} UV22) wurden in einem Reaktionskolben vorgelegt und auf 80°C erhitzt. Dann ließ man bei 80-85°C so lange reagieren bis der NCO Wert auf < 0,8% abgefallen war, gab die auf NCO berechnete equivalente Menge Ethanol zu, und ließ weiterreagieren bis der NCO Wert auf 0 abgefallen war. Das GPC Chromatogramm zeigte eine vollständige Umsetzung des Photoinitiators. Dann gab man 1,5 weitere Teile des Stabilisators UV22 zu, ließ abkühlen, gab 2% Wasser zu und füllte ab.

### Beispiel 6:

86 Teile eines Polyetheracrylates (Laromer^{®} LR 8863), 120 Teile eines Isocyanatoacrylats (Laromer^{®} LR9000), 79 Teile eines Photoinitiators (Irgacure^{®} 2959) 50 ppm Borchi® Kat 315 Bismuth carboxylat) und 0,015 Teile eines weiteren Stabilisators (Irgastab^{®} UV22) wurden in einem Reaktionskolben vorgelegt und auf 80°C erhitzt. Dann ließ man bei 80-85°C so lange reagieren bis der NCO Wert auf < 0,8% abgefallen war, gab die auf NCO berechnete equivalente Menge Lutensol TO3 (C13 alkohol ethoxylat, BASF SE) zu, und ließ weiterreagieren bis der NCO Wert auf 0 abgefallen war. Das GPC Chromatogramm zeigte eine vollständige Umsetzung des Photoinitiators. Dann gab man 1,5 weitere Teile des Stabilisators UV22 zu, ließ abkühlen, gab 2% Wasser zu und füllte ab.

### Anwendungsbeispiele

### Beispiel 7

Ein Produkt wurde analog Beispiel 1 als 70 Gew%-ige Lösung in Laromer^{®} LR 8863 ohne Zugabe von Wasser hergestellt und mit verschiedenen Mengen Wasser vermischt und das Aussehen sowie die Viskosität geprüft.

| | Viskosität bei 25 °C | Fließfähigkeit bei 25°C | Mischbarkeit |
|---|---|---|---|
| Ohne | 600 Pas | Nein | Klar |
| 1 % Wasser | 322 Pas | Schlecht | Klar |
| 2% Wasser | 170 Pas | Gut | Klar |
| 5% Wasser | 82 Pas | Sehr gut | Trüb |

Man sieht, daß die Formulierung ohne Zugabe von Wasser nicht fließfähig ist und bei Zugabe von zuviel Wasser eintrübt. Mithin bleibt ein enges Fenster, in dem sowohl die Viskosität als auch die Anwendungseigenschaften günstig sind.

### Beispiel 8

Verschiedene einbaubare Photoinitiatoren gemäß der vorliegenden Erfindung und gemäß der DE 10 2006 047863 wurden hergestellt und mit strahlungshärtbaren Acrylaten zu einem Drucklack formuliert.

Beispiel 5 aus DE 10 2006 047863 wurde dabei wiederholt und bezogen auf dessen Photoinitiatorgehalt als reiner Initiator betrachtet (Vergleich a) bzw. bezogen auf dessen Gehalt an Reaktivverdünner als Beschichtungsmasse (Vergleich c).

Mit den Formulierungen wurden die Härtungsgeschwindigkeit, die Viskosität, der Glanz und die Abriebstabilität, sowie die Lösemittelbeständigkeit bestimmt.
Der Lack wurde dazu mit einem 6µm Spiralrakel auf Leneta Karton beschichtet und mit einer UV-Anlage M-30-2x1-BLKU der Fa. IST die mit einer, in der Leistung, regelbaren 200W/cm Hg-Mitteldrucklampe ausgerüstet ist, belichtet. Die Härtungsgeschwindigkeit wurde mit dem Fingernagel bestimmt. Wenn die Oberfläche keine Kratzer aufwies, galt der Lack als gehärtet.

Der Glanz wurde mit einem Byk-Gardner Micro-Tri-Gloss Glanzmessgerät bei 60° auf Leneta Karton bestimmt. Nach je 5 Doppelhüben mit einem Scotch Brite® Pad Typ 07448 (Fa. 3M) wurde die Abriebfestigkeit mittels des Glanzabfalls bestimmt

| | Vergleich a | Vergleich b | Erfindungsgemäß | Vergleich c |
|---|---|---|---|---|
| Beispiel 5 aus DE 10 2006 047863 | 15,0 | | | |
| Beispiel 2 aus DE 10 2006 047863 (d.h. ohne Wasser) | | 15 | | |
| Beispiel 5 d.h. enthaltend 2 Gew% Wasser | | | 15,0 | |
| Beispiel 5 aus DE 10 2006 047863 | | | | 100 |
| Laromer® LR 8986 | 27 | 27 | 27 | |
| Laromer® PO77F | 33 | 33 | 33 | |
| Tripropylenglykol diacrylat | 39,8 | 39,8 | 39,8 | |
| EFKA 7305 | 0,2 | 0,2 | 0,2 | |
| Summe | 100 | 100 | 100 | |
| Härtungsgeschwindigkeit | 3m/min | 18m/min | 15m/min | 5m/min |
| Viskosität des Reaktionsgemischs | 0,2Pas | 600Pas | 170Pas | - |
| Viskosität der Beschichtungsmasse | 0,3 Pas | 0,6Pas | 0,4Pas | 0,2Pas |
| Glanz | 85 | 92 | 92 | 70 |
| Abriebsfestigkeit (Restglanz nach 5 Doppelhüben mit Scotch Brite 07448 (Fa. 3M)) | 49 | 77 | 77 | 61 |
| MEK Festigkeit Doppelhübe | <10 | 30 | 30 | 30 |

| | | | | |
|---|---|---|---|---|
| Bei Laromer® LR 8986 handelt es sich um ein handelsübliches Gemisch aus Epoxyacrylat und Triacrylat von ethoxyliertem Trimethylolpropan der BASF SE, Ludwigshafen. Bei Laromer® PO 77F handelt es sich um ein handelsübliches aminmodifiziertes etwa trifunktionelles Polyetheracrylat der BASF SE, Ludwigshafen. Bei EFKA 7305 handelt es sich um ein handelsübliches Additiv für Verlauf und Oberflächenglätte der BASF SE, Ludwigshafen. | | | | |

Man sieht, daß im erfindungsgemäßen Beispiel durch Zugabe von Wasser eine Absenkung der Viskosität auch des Drucklackes möglich ist. Jedoch ist im Vergleich b das Reaktionsgemisch gemäß Beispiel 2 aus DE 10 2006 047863 (d.h. ohne Wasser) nicht fließfähig und somit schlecht formulierbar, außerdem ist die Viskosität des Drucklacks für ein optimales Beschichtungergebnis zu hoch.

Aus den Vergleichen a und c zeigt sich, daß Beispiel 5 aus DE 10 2006 047863 im direkten Vergleich mit dem erfindungsgemäßen Beispiel schlechtere anwendungstechnische Eigenschaften, wie einen geringeren Restglanz und schlechtere Abriebfestigkeit aufweist und eine ungenügende Reaktivität zeigt.

### Beispiel 9

Die erfindungsgemäßen Photoinitiatoren aus Beispiel 5 (in Beispiel 9a) und Beispiel 6 (in Beispiel 9b) wurden in einer Offsetdruckfarbe eingesetzt, als Vergleich wurde Irgacure® 2959 gewählt. Die Konzentration an Irgacure® 2959 im Vergleichsbeispiel entsprach dabei der Konzentration des Chromophors in dem erfindungsgemäßen Photioinitiator. Dazu wurden alle Komponenten vermischt und auf einer Labordrehwalze der Fa. Bühler dispergiert, bis alle Photoinitiatoren gelöst waren.
Dann wurde die Druckfarbe mit einem Offsetprobedruckgerät der Fa. Prüfbau auf gestrichenen Karton mit einem Auftragsgewicht von 1,7g/m² gedruckt und mit einer UV Belichtungseinheit M-30-2x1-BLKU der Fa. IST bei 80W/cm (Aluminiumreflektoren) belichtet. Die Durchhärtung wurde mit dem REL Tester (PTC-Prüfgerät, Fa. Prüfbau) bestimmt. Die Farbdichte wurde mit einem Densitometer SPM55 der Fa. Gretag-Macbeth bestimmt.

| | Bsp. 9a | Bsp. 9b | Vergleich |
|---|---|---|---|
| Heliogen Blau D7088 | 16 | 16 | 16 |
| Ebecryl 657 | 19 | 19 | 20 |
| Ebecryl 3700 | 17 | 17 | 18 |
| Laromer® PE 9084 | 19 | 19 | 20 |
| Laromer® GPTA | 16 | 16 | 19 |
| Luwax® AF30 | 1 | 1 | 1 |
| Irgacure® 369 | 4 | 4 | 4 |
| Irgacure® 2959 | | | 2 |
| Initiator aus Beispiel 5 | 8 | | |
| Initiator aus Beispiel 6 | | 8 | |
| Summe | 100 | 100 | 100 |
| Härtungsgeschwindigkeit m/min | 180 | 180 | 130 |
| Farbdichte des Andrucks | 1,41 | 1,53 | 1,37 |

Überraschend zeigt sich, dass die erfindungsgemäßen Initiatoren bei gleicher Chromphorkonzentration sogar eine deutlich höhere Härtungsgeschwindigkeit als das Vergleichsbeispiel aufweisen. Die Farbdichte als Maß für die Intensität des Farbeindrucks ist bei Beispiel 9b, bei dem ein Fettsäurealkohol eingesetzt wurde, sogar höher als bei den anderen Versuchen, was auch auf eine dispergierende Wirkung des erfindungsgemäßen Photoinitiators hinweist.

## Patentansprüche

1. Verfahren zur Herstellung von einbaubaren Photoinitiatoren mit niedriger Viskosität, umfassend die Schritte
1) Aufbau eines Polyurethans A, enthaltend als Aufbaukomponenten
(a) mindestens ein organisches allophanatgruppenhaltiges Polyisocyanat mit einer NCO Funktionalität von mindestens 2, aufgebaut aus aliphatischen C₄- bis C₂₀-Alkylendiisocyanaten,
(b) mindestens eine Verbindung mit jeweils mindestens einer gegenüber Isocyanat reaktiven Gruppe und mindestens einer radikalisch polymerisierbaren ungesättigten Gruppe,
(c) mindestens einen Photoinitiator mit mindestens einer gegenüber Isocyanat reaktiven Gruppe,
(d) gegebenenfalls mindestens ein weiteres Di- und/oder Polyisocyanat, das von der Verbindung (a) verschieden ist,
(e) gegebenenfalls mindestens eine Verbindung mit mindestens zwei gegenüber Isocyanat reaktiven Gruppen, sowie
(f) optional mindestens eine Verbindung mit genau einer gegenüber Isocyanat reaktiven Gruppe
unter wasserfreien Bedingungen, **dadurch gekennzeichnet, daß** die Herstellung der Polyurethane (A) in Gegenwart von weniger als 1000 Gew.ppm einer Wismut-, Zink- und/oder Titan-haltigen Verbindung erfolgt und man in einem Schritt 2) das aus Schritt 1) erhaltene Polyurethan (A) mit 0,5 bis 4 Gew% Wasser, bezogen auf die Menge Polyurethan (A), vermischt.

2. Verfahren gemäß Anspruch 1, **dadurch gekennzeichnet, daß** Komponente (b) über Allophanatgruppen an die Komponente (a) gebunden ist.

3. Verfahren gemäß Anspruch 2, **dadurch gekennzeichnet, daß** der Gehalt an Allophanatgruppen (berechnet als C₂N₂HO₃ = 101 g/mol) 1 bis 28 Gew% beträgt.

4. Verfahren gemäß einem der vorstehenden Ansprüche, **dadurch gekennzeichnet, daß** die Verbindungen (c) 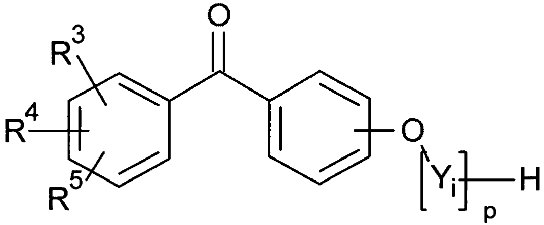 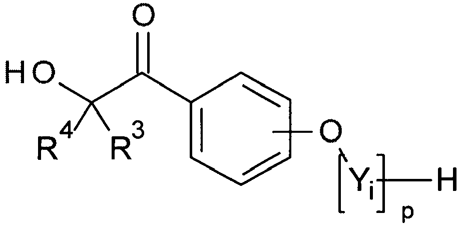 sind,
worin
R³, R⁴ und R⁵ jeweils unabhängig voneinander Wasserstoff, eine 1 bis 4 Kohlenstoffatome enthaltende Alkylgruppe, oder eine 1 bis 4 Kohlenstoffatome enthaltende Alkyloxygruppe,
p 0 (Null) oder eine ganze Zahl von 1 bis 10 sein kann und
Yᵢ für i = 1 bis p unabhängig voneinander ausgewählt sein kann aus der Gruppe - CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-.

5. Verfahren gemäß einem der vorstehenden Ansprüche, **dadurch gekennzeichnet, daß** die Verbindung (c) ausgewählt ist aus der Gruppe bestehend aus 2-Hydroxy-2-methyl-1-phenyl-propan-1-on, 1-Hydroxy-cyclohexyl-phenylketon, 1-[4-[2-Hydroxyethoxy)-phenyl]-2-hydroxy-2-methyl-1-propan-1-on, 2-Hydroxy-1-{4-[4-(2-hydroxy-2-methyl-propionyl)-benzyl]-phenyl}-2-methyl-propan-1-on, 2-Hydroxy-1-[4-[hydroxy-[4-(2-hydroxy-2-methyl-propanoyl)phenyl]methyl]phenyl]-2-methyl-propan-1-on, [4-[3-(4-benzoylphenoxy)-2-hydroxy-propoxy]phenyl]-phenyl-methanon, Benzoin, Benzoin-*iso*-butylether, Benzoin-tetrahydropyranylether, Benzoin-methylether, Benzoin-ethylether, Benzoin-butylether, Benzoin-*iso*-propylether, 7-H-Benzoin-methylether, 2-Hydroxy-2,2-dimethylacetophenon und 1-Hydroxyacetophenon.

6. Verfahren gemäß einem der vorstehenden Ansprüche, **dadurch gekennzeichnet, daß** es sich bei der Verbindung (f) um alkoxylierte aliphatische Alkohole der Formel
R⁹-O-[-Zᵢ-]_{q}-H
handelt, worin
R⁹ einen 1 bis 20 Kohlenstoffatome, bevorzugt 10 bis 20 Kohlenstoffatome aufweisenen Alkylrest,
q eine positive ganze Zahl von 1 bis 15, bevorzugt 1 bis 10 und
Zᵢ für i = 1 bis q unabhängig voneinander ausgewählt sein kann aus der Gruppe - CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
bedeuten.

7. Verfahren gemäß einem der vorstehenden Ansprüche, **dadurch gekennzeichnet, daß** die Wismut-, Zink- und/oder Titan-haltigen Verbindung ausgewählt ist aus der Gruppe bestehend aus Zink-carboxylaten von Carboxylaten, die mindestens sechs Kohlenstoffatome aufweisen, Wismut-carboxylaten von Carboxylaten, die mindestens sechs Kohlenstoffatome aufweisen und Titan tetra-alkoholate Ti(OR)₄ von Alkoholen ROH mit 1 bis 8 Kohlenstoffatomen.

8. Formulierungen von einbaubaren Photoinitiatoren, bestehend aus mindestens einem Polyurethan A, wie definiert in Anspruch 1, sowie 0,5 bis 4 Gew% Wasser, bezogen auf die Menge Polyurethan (A), sowie
optional mindestens eine multifunktionelle polymerisationsfähige Verbindung (B).

9. Tinten, Druckfarben und Drucklacke, enthaltend
mindestens ein Polyurethan A, wie definiert in Anspruch 1,
sowie zusätzlich zum Polyurethan (A)
0,5 bis 4 Gew% Wasser, bezogen auf die Menge Polyurethan (A),
optional mindestens ein Pigment,
mindestens eine multifunktionelle polymerisationsfähige Verbindung (B),
optional mindestens einen weiteren Photoinitiator, sowie
optional druckfarbentypische Additive.

10. Tinten, Druckfarben und Drucklacke gemäß Anspruch 9, **dadurch gekennzeichnet, daß** der optionale mindestens eine weitere Photoinitiator ausgewählt ist aus der Gruppe bestehend aus 2,4,6-Trimethylbenzoyldiphenylphosphinoxid, Ethyl-2,4,6-trimethylbenzoylphenylphosphinat, Bis-(2,4,6-trimethylbenzoyl)-phenyl-phosphinoxid, 2-Benzyl-2-dimethylamino-4'-morpholinobutyrophenon, 2-(Di-methylamino)-1-(4-morpholinophenyl)-2-(p-tolylmethyl)butan-1-on, 2-Hydroxy-1-[4-[[4-(2-hydroxy-2-methyl-propanoyl)phenyl]methyl]phenyl]-2-methyl-propan-1-on, polymeren Benzophenonderivaten, polymeren Thioxanthonderivaten, polymeren α-Aminoketonen und Silsesquioxanverbindungen mit mindestens einer initiierend wirkenden Gruppe.

11. Verwendung der Druckfarben gemäß Anspruch 10 zum Bedrucken von Polyamiden, Polethylen, Polypropylen, Polyestern, Poylethylenterephthalat, Polystyrol, Papier, Pappe, Karton, kunststoffbeschichtetem Papier, kunststoffbeschichteter Pappe oder kunststoffbeschichtetem Karton, Aluminium und aluminiumbeschichteten Kunststofffolien.

12. Verwendung von Substraten, ausgewählt aus der Gruppe bestehend aus Polyamid, Polethylen, Polypropylen, Polyestern, Poylethylenterephthalat, Polystyrol, Papier, Pappe, Karton, kunststoffbeschichtetes Papier, kunststoffbeschichtete Pappe oder kunststoffbeschichteter Karton, Aluminium und aluminiumbeschichteten Kunststofffolien, bedruckt mit einer Druckfarbe gemäß Anspruch 10 als Verpackungsmaterialien für Lebensmittel, Kosmetik und Arzneimittel.

## Claims

1. A process for preparing incorporable photoinitiators of low viscosity, comprising the steps of
1) synthesizing a polyurethane A comprising as synthesis components
(a) at least one organic polyisocyanate containing allophanate groups and having an NCO functionality of at least 2, synthesized from aliphatic C₄ to C₂₀ alkylene diisocyanates,
(b) at least one compound having in each case at least one isocyanate-reactive group and at least one radically polymerizable unsaturated group,
(c) at least one photoinitiator having at least one isocyanate-reactive group,
(d) optionally at least one further diisocyanate and/or polyisocyanate, which is different from the compound (a),
(e) optionally at least one compound having at least two isocyanate-reactive groups, and also
(f) optionally at least one compound having precisely one isocyanate-reactive group
under anhydrous conditions, wherein the polyurethanes (A) are prepared in the presence of less than 1000 ppm by weight of a bismuth-, zinc- and/or titanium-containing compound and in a step 2) the polyurethane (A) obtained from step 1) is mixed with 0.5% to 4% by weight of water, based on the amount of polyurethane (A).

2. The process according to claim 1, wherein component (b) is bonded via allophanate groups to component (a).

3. The process according to claim 2, wherein the amount of allophanate groups (calculated as C₂N₂HO₃ = 101 g/mol) is 1% to 28% by weight.

4. The process according to any of the preceding claims, wherein the compounds (c) are 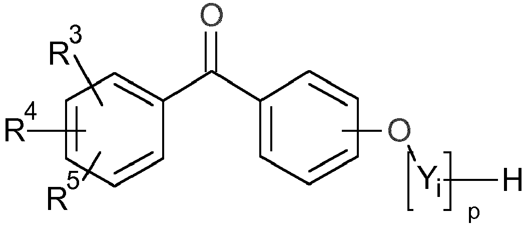 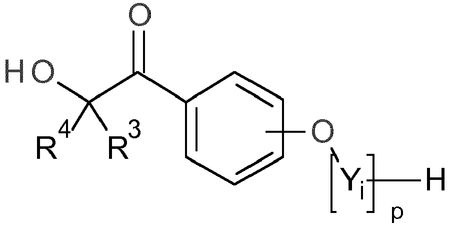 in which
R³, R⁴, and R⁵ each independently of one another are hydrogen, an alkyl group containing 1 to 4 carbon atoms or an alkyloxy group containing 1 to 4 carbon atoms,
p may be 0 (zero) or an integer from 1 to 10, and
Yi for i = 1 to p independently of one another may be selected from the group of CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O-, and CHPh-CH₂-O-, preferably from the group of -CH₂-CH₂-O-, -CH₂-CH(CH₃)-O-, and CH(CH₃)-CH₂-O-, and more preferably -CH₂-CH₂-O-.

5. The process according to any of the preceding claims, wherein the compound (c) is selected from the group consisting of 2-hydroxy-2-methyl-1-phenyl-propan-1-one, 1-hydroxycyclohexyl phenyl ketone, 1-[4-(2-hydroxyethoxy)phenyl]-2-hydroxy-2-methyl-1-propan-1-one, 2-hydroxy-1-{4-[4-(2-hydroxy-2-methyl-propionyl)benzyl]phenyl}-2-methylpropan-1-one, 2-hydroxy-1-[4-[hydroxy[4-(2-hydroxy-2-methylpropanoyl)phenyl]methyl]phenyl]-2-methyl-propan-1-one, [4-[3-(4-benzoylphenoxy)-2-hydroxypropoxy]phenyl]phenylmethanone, benzoin, benzoin isobutyl ether, benzoin tetrahydropyranyl ether, benzoin methyl ether, benzoin ethyl ether, benzoin butyl ether, benzoin isopropyl ether, 7H-benzoin methyl ether, 2-hydroxy-2,2-dimethylacetophenone, and 1-hydroxy-acetophenone.

6. The process according to any of the preceding claims, wherein the compound (f) comprises alkoxylated aliphatic alcohols of the formula
R⁹-O-[-Zᵢ-]_{q}-H
in which
R⁹ is an alkyl radical having 1 to 20 carbon atoms, preferably 10 to 20 carbon atoms,
q is a positive integer from 1 to 15, preferably 1 to 10, and
Zᵢ for i = 1 to q independently of one another may be selected from the group of CH₂-CH₂-O-, -CH₂-CH(CH₃)-O-, -CH(CH₃)-CH₂-O-, -CH₂-C(CH₃)₂-O-,
-C(CH₃)₂-CH₂-O-, -CH₂-CHVin-O-, -CHVin-CH₂-O-, -CH₂-CHPh-0-, and CHPh-CH₂-O-, preferably from the group of -CH₂-CH₂-O-, -CH₂-CH(CH₃)-O-, and CH(CH₃)-CH₂-O-, and more preferably -CH₂-CH₂-O-.

7. The process according to any of the preceding claims, wherein the bismuth-, zinc- and/or titanium-containing compound is selected from the group consisting of zinc carboxylates of carboxylates which have at least six carbon atoms, bismuth carboxylates of carboxylates which have at least six carbon atoms, and titanium tetraalcoholates Ti(OR)₄ of alcohols ROH having 1 to 8 carbon atoms.

8. A formulation of incorporable photoinitiators, consisting of at least one polyurethane A as defined in claim 1, and also 0.5% to 4% by weight of water, based on the amount of polyurethane (A), and also
optionally at least one polyfunctional polymerization compound (B).

9. An ink, printing-ink or print varnish comprising at least one polyurethane A as defined in claim 1,
and also, in addition to the polyurethane (A),
0.5 to 4% by weight of water, based on the amount of polyurethane (A),
optionally at least one pigment,
at least one polyfunctional polymerizable compound (B),
optionally at least one further photoinitiator, and also
optionally additives typical of printing-inks.

10. The ink, printing-ink or print varnish according to claim 9, wherein the optional at least one further photoinitiator is selected from the group consisting of 2,4,6-trimethylbenzoyldiphenyl¬phosphine oxide, ethyl 2,4,6-trimethylbenzoyl¬phenyl-phosphinate, bis(2,4,6-tri¬methylbenzoyl)phenylphosphine oxide, 2-benzyl-2-dimethylamino-4'-morpholinobutyrophenone, 2-(dimethylamino)-1-(4-morpholinophenyl)-2-(p-tolylmethyl)butan-1-one, 2-hydroxy-1-[4-[[4-(2-hydroxy-2-methylpropanoyl)phenyl]methyl]phenyl]-2-methylpropan-1-one, polymeric benzophenone derivatives, polymeric thioxanthone derivatives, polymeric α-amino ketones, and silsesquioxane compounds having at least one initiating group.

11. The use of a printing-ink according to claim 10 for printing polyamides, polyethylene, polypropylene, polyesters, polyethylene terephthalate, polystyrene, paper, paperboard, cardboard, plastics-coated paper, plastics-coated paperboard or plastics-coated cardboard, aluminum or aluminum-coated polymeric films.

12. The use of substrates selected from the group consisting of polyamide, polyethylene, polypropylene, polyesters, polyethylene terephthalate, polystyrene, paper, paperboard, cardboard, plastics-coated paper, plastics-coated paperboard or plastics-coated cardboard, aluminum or aluminum-coated polymeric films, printed with a printing-ink according to claim 10, as packaging materials for foods, cosmetics, and pharmaceuticals.

## Revendications

1. Procédé pour la préparation de photo-initiateurs pouvant être incorporés présentant une viscosité basse, comprenant les étapes consistant à
1) former un polyuréthane A, contenant comme composants constitutifs
(a) au moins un polyisocyanate organique contenant des groupes allophanate, présentant une fonctionnalité NCO d'au moins 2, formé à partir de diisocyanates de C₄-C₂₀-alkylène aliphatiques,
(b) au moins un composé présentant à chaque fois au moins un groupe réactif par rapport à isocyanate et au moins un groupe insaturé polymérisable par voie radicalaire,
(c) au moins un photo-initiateur présentant au moins un groupe réactif par rapport à isocyanate,
(d) le cas échéant au moins un autre diisocyanate et/ou polyisocyanate, qui est différent du composé (a),
(e) le cas échéant au moins un composé présentant au moins deux groupes réactifs par rapport à isocyanate, ainsi que
(f) éventuellement au moins un composé présentant exactement un groupe réactif par rapport à isocyanate,
dans des conditions anhydres, **caractérisé en ce que** la préparation des polyuréthanes (A) a lieu en présence de moins de 1000 ppm en poids d'un composé contenant du bismuth, du zinc et/ou du titane et on mélange dans une étape 2) le polyuréthane (A) obtenu dans l'étape 1) avec 0,5 à 4% en poids d'eau, par rapport à la quantité de polyuréthane (A).

2. Procédé selon la revendication 1, **caractérisé en ce que** le composant (b) est lié via des groupes allophanate au composant (a).

3. Procédé selon la revendication 2, **caractérisé en ce que** la teneur en groupes allophanate (calculés sous forme de C₂N₂HO₃ = 101 g/mole) est de 1 à 28% en poids.

4. Procédé selon l'une quelconque des revendications précédentes, **caractérisé en ce que** les composés (c) sont 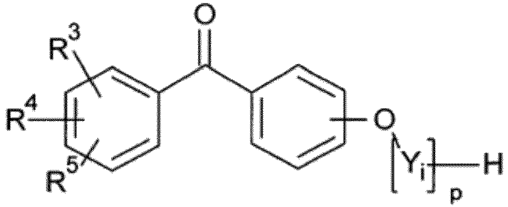 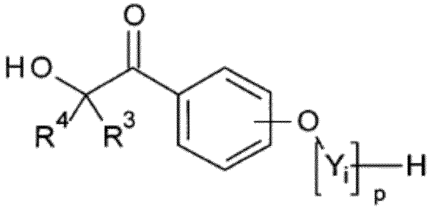 où
R³, R⁴ et R⁵ représentent, à chaque fois indépendamment les uns des autres, hydrogène, un groupe alkyle comprenant 1 à 4 atomes de carbone ou un groupe alkyloxy contenant 1 à 4 atomes de carbone,
p peut valoir 0 (zéro) ou un nombre entier de 1 à 10 et
Yᵢ pour i = 1 à p, peut être choisi indépendamment dans le groupe formé par -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O-et -CHPh-CH₂-O-, de préférence dans le groupe formé par -CH₂-CH₂-O-, -CH₂-CH(CH₃)-O- et -CH(CH₃)-CH₂-O-et est de manière particulièrement préférée -CH₂-CH₂-O-.

5. Procédé selon l'une quelconque des revendications précédentes, **caractérisé en ce que** le composé (c) est choisi dans le groupe constitué par la 2-hydroxy-2-méthyl-1-phénylpropan-1-one, la 1-hydroxycyclohexylphénylcétone, la 1-[4-[2-hydroxyéthoxy)phényl]-2-hydroxy-2-méthyl-1-propan-1-one, la 2-hydroxy-1-{4-[4-(2-hydroxy-2-méthylpropionyl)-benzyl]-phényl}-2-méthylpropan-1-one, la 2-hydroxy-1-[4-[hydroxy-[4-(2-hydroxy-2-méthylpropanoyl)phényl]méthyl]phényl]-2-méthylpropan-1-one, la [4-[3-(4-benzoylphénoxy)-2-hydroxypropoxy]phényl]-phénylméthanone, la benzoïne, le benzoïne-isobutyléther, le benzoïnetétrahydropyrannyléther, le benzoïneméthyléther, le benzoïne-éthyléther, le benzoïnebutyléther, le benzoïne-isopropyléther, le 7-H-benzoïneméthyléther, la 2-hydroxy-2,2-diméthylacétophénone et la 1-hydroxyacétophénone.

6. Procédé selon l'une quelconque des revendications précédentes, **caractérisé en ce qu'**il s'agit, pour le composé (f) d'alcools aliphatiques alcoxylés de formule
R⁹-O-[-Zᵢ-]_{q}-H
dans laquelle
R⁹ représente un radical alkyle présentant 1 à 20 atomes de carbone, de préférence 10 à 20 atomes de carbone,
q représente un nombre entier positif de 1 à 15, de préférence de 1 à 10 et
Zᵢ pour i = 1 à q, peut être choisi indépendamment dans le groupe formé par -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- et -CHPh-CH₂-O-, de préférence dans le groupe formé par -CH₂-CH₂-O-, -CH₂-CH(CH₃)-O- et -CH(CH₃)-CH₂-O- et est de manière particulièrement préférée -CH₂-CH₂-O-.

7. Procédé selon l'une quelconque des revendications précédentes, **caractérisé en ce que** le composé contenant du bismuth, du zinc et/ou du titane est choisi dans le groupe constitué par les carboxylates de zinc de carboxylates qui présentent au moins six atomes de carbone, par les carboxylates de bismuth de carboxylates qui présentent au moins six atomes de carbone et par les tétraalcoolates de titane Ti(OR)₄ d'alcools ROH comprenant 1 à 8 atomes de carbone.

8. Formulations de photo-initiateurs pouvant être incorporés, constituées par au moins un polyuréthane A, tel que défini dans la revendication 1 ainsi que par 0,5 à 4% en poids d'eau, par rapport à la quantité de polyuréthane (A), ainsi que par éventuellement au moins un composé (B) multifonctionnel apte à la polymérisation.

9. Encres, encres d'imprimerie et laques d'imprimerie contenant au moins un polyuréthane A, tel que défini dans la revendication 1, ainsi qu'en plus du polyuréthane (A)
0,5 à 4% en poids d'eau, par rapport à la quantité de polyuréthane (A), éventuellement au moins un pigment, au moins un composé (B) multifonctionnel apte à la polymérisation, éventuellement au moins un autre photo-initiateur ainsi qu'éventuellement des additifs caractéristiques des encres d'imprimerie.

10. Encres, encres d'imprimerie et laques d'imprimerie selon la revendication 9, **caractérisées en ce que** ledit au moins un autre photo-initiateur éventuel est choisi dans le groupe constitué par le 2,4,6-triméthylbenzoyldiphénylphosphinoxyde, le 2,4,6-triméthylbenzoylphénylphosphinate d'éthyle, le bis-(2,4,6-triméthylbenzoyl)-phénylphosphinoxyde, la 2-benzyl-2-diméthylamino-4'-morpholinobutyrophénone, la 2-(diméthylamino)-1-(4-morpholinophényl)-2-(p-toluylméthyl)butan-1-one, la 2-hydroxy-1-[4-[[4-(2-hydroxy-2-méthylpropanoyl)phényl]méthyl]phényl]-2-méthylpropan-1-one, les dérivés polymères de la benzophénone, les dérivés polymères du thioxanthone, les α-aminocétones polymères et les composés de silsesquioxane présentant au moins un groupe à effet initiateur.

11. Utilisation des encres d'imprimerie selon la revendication 10 pour l'impression de polyamides, de polyéthylène, de polypropylène, de polyesters, de poly(téréphtalate d'éthylène), de polystyrène, de papier, de carton-pâte, de carton, de papier revêtu par du matériau synthétique, de carton-pâte revêtu par du matériau synthétique ou de carton revêtu par du matériau synthétique, d'aluminium et de feuilles en matériau synthétique revêtues par de l'aluminium.

12. Utilisation de substrats, choisis dans le groupe constitué par le polyamide, le polyéthylène, le polypropylène, les polyesters, le poly(téréphtalate d'éthylène), le polystyrène, le papier, le carton-pâte, le carton, le papier revêtu par du matériau synthétique, le carton-pâte revêtu par du matériau synthétique ou le carton revêtu par du matériau synthétique, l'aluminium et les feuilles en matériau synthétique revêtues par de l'aluminium, imprimés par une encre d'imprimerie selon la revendication 10 comme matériaux d'emballage pour des aliments, des cosmétiques et des médicaments.
